# EUROPEAN PATENT SPECIFICATION

(11) **EP 2 960 823 B1**
(45) Date of publication and mention of the grant of the patent: **19.12.2018**
(21) Application number: 15172117.2
(22) Date of filing: 15.06.2015
(51) Int. Cl.: G06F 21/62

(54) **METHOD, DEVICE AND SYSTEM FOR MANAGING AUTHORITY**
VERFAHREN, VORRICHTUNG UND SYSTEM ZUR VERWALTUNG VON AUTORITÄT
PROCÉDÉ, DISPOSITIF ET SYSTÈME DE GESTION D'AUTORITÉ

(30) Priority: 24.06.2014 CN 201410286860
(43) Date of publication of application: 30.12.2015
(73) Proprietor: Xiaomi Inc., Beijing 100085 (CN)
(72) Inventor: ZHANG, Yang, 100085 Beijing (CN); ZHANG, Bo, 100085 Beijing (CN)
(74) Representative: Delumeau, François Guy

(56) References cited:
- EP-A2- 1 389 752
- WO-A2-02/14989
- GB-A- 2 236 604
- US-A1- 2003 115 484

## Description

### TECHNICAL FIELD

The present disclosure generally relates to the field of smart devices, and more particularly, to a method, a device and a system for managing an authority.

### BACKGROUND

As the smart devices are widely used, more and more applications are installed in the smart devices such as smart phones by people, and for purpose of strategies such as security, authority management also becomes more and more important. In the related art, an authority is used to describe whether something is permitted to be done, and the authority management generally means that a user may access and can only access resources that are authorized to the user herself/himself according to security rules or security strategies set by systems. The authority management nearly exists in any system, as long as the system has users and passwords, the system involves the authority management.

Currently, in the related art, generally, according to different levels of users, different authority operations are granted by the authority management. Taking authority security strategy management in an Android system as an example, authorities in the Android system are classified into different levels, and all predefined authorities in the system respectively belong to different levels according to different functions. For general authorities, as long as applications apply for the authorities, the applications may be granted the corresponding authorities according to settings of the users, or the applications may be granted the corresponding authorities according to choices of the users; and for system authorities, only applications that have certification of platform level can apply for the authorities. When the applications try to perform limited operations without being granted authorities, the applications are limited not to perform the operations by the system, and given a warning. System applications may use any authority. The declarant of the authorities may use the authorities unconditionally.

The above described manner of the authority management of the applications is predefined by the system with respect to the users, and it is not flexible to use the authority; further, when the authority is changed, the user needs to apply for the change, perform operations, and then change the authority, according to use habits of the users. However the users are not used to set each authority for each application, thus there is a problem that authority settings of the applications are not reasonable, such that the applications are inconvenient to be used.

Document GB 2 236 604 A discloses a solution for protecting against the unauthorized use of software in a computer network.

Document US 2003/115484 A1 discloses a system and a method for incrementally distributing a security policy in a computer network.

### SUMMARY

In order to overcome the problems existing in the related art, the present disclosure provides a method, a device and a system for managing an authority, to realize the problem that an authority predefined by a system in a conventional smart device is unreasonable, such that automatic update of authority settings may be realized on the premise that privacy of a user is guaranteed, and the authority settings of an application are more reasonable.

According to a first aspect, the invention relates to a method for managing an authority, comprising:
acquiring authority use data of a user, the authority use data being at least one history use record of an authority option of the user that is recorded in a cloud;
processing the authority use data to obtain an authority result; and
sending the authority result obtained by the processing to a terminal, for the terminal to update a corresponding authority option.

According to the invention, the step of processing the authority use data to obtain the authority result comprises:
processing the authority use data in accordance with an authority choice, to obtain an authority confidence value and an initial authority choice; and
adjusting the initial authority choice according to the authority confidence value and a threshold value, to obtain the authority result, wherein the authority result includes a user ID, an application name, a name of an authority, and an authority choice.

In a particular embodiment, the step of processing the authority use data in accordance with the authority choice, to obtain the authority confidence value and the initial authority choice comprises:
de-noising processing the authority use data;
performing a SVM training on the de-noised authority use data respectively in accordance with two authority choices of permission and rejection in the authority option, to obtain the authority confidence value and the initial authority choice of the corresponding authority option.
In the present invention, "de-noising data" refers to removing noise data and invalid data, which may use a de-noising manner based on wavelet analysis or an offline curve de-noising manner, and the specific de-noising manner is not limited in this solution.

In a particular embodiment the step of processing the authority use data in accordance with the authority choice, to obtain the authority confidence value and the initial authority choice comprises:
de-noising processing the authority use data;
performing a cluster analysis on the authority use data with respect to the user in accordance with a cluster algorithm, to obtain a cluster type of the user; and
according to the cluster type of the user, performing a SVM training on each type of the user respectively in accordance with two choices of permission and rejection in the authority option, to obtain the authority confidence value and the initial authority choice corresponding to the authority option.

In a particular embodiment the step of processing the authority use data in accordance with the authority choice, to obtain the authority confidence value and the initial authority choice comprises:
de-noising processing the authority use data;
classifying the de-noised authority use data into training set data and testing set data in accordance with a classification ratio; and
performing a SVM training on the training set data respectively in accordance with two authority choices of permission and rejection in the authority option, to obtain the initial authority choice and the authority confidence value corresponding to the authority option.

In a particular embodiment, the method further comprises:
determining correctness of the initial authority choice based on the testing set data, to obtain an accuracy of the authority choice.

In a particular embodiment, the step of adjusting the initial authority choice according to the authority confidence value and the threshold value, to obtain the authority result comprises:
comparing the authority confidence value corresponding to the authority option with the threshold value; and
when the authority confidence value is smaller than the threshold value, adjusting the initial authority choice to be an inquiry choice, as the authority result; and
when the authority confidence value is greater than or equal to the threshold value, using the initial authority choice as the authority result.

According to a second aspect, the invention relates to a method for managing an authority, comprising:
receiving an authority result sent from a server, the authority result including a user ID, an application name, a name of an authority, and an authority choice and being obtained by processing authority use data which is at least one history use record of an authority option of the user that is recorded in a cloud;
acquiring configuration information of a corresponding authority according to the authority result; and
updating a corresponding authority option according to the configuration information corresponding to the current authority.

In a particular embodiment the step of acquiring the configuration information of the corresponding authority according to the authority result comprises:
acquiring an application name in the authority result that is currently received; and
acquiring the configuration information of the current authority according to the application name.

In a particular embodiment the step of acquiring the application name in the authority result that is currently received comprises:
acquiring a user ID in the authority result that is currently received; and
when the user ID in the authority result matches a terminal user ID, acquiring the application name.

In a particular embodiment the step of updating the corresponding authority option according to the configuration information corresponding to the current authority comprises:
querying a type to which a name of the current authority belongs, according to type information in the configuration information; and
when a type of the current authority is an auto-start type, determining whether the current authority belongs to a white list, and if it does, popping up a dialog box to prompt to update description information of the corresponding authority option; and
updating the authority option according to a choice of the user.

In a particular embodiment the step of updating the corresponding authority option according to the configuration information corresponding to the current authority comprises:
querying a type to which a name of the current authority belongs, according to type information in the configuration information; and
when a type of the current authority is an application type, determining whether the current authority belongs to a sensitive authority, and if it does, popping up a dialog box to inquire the user whether to update the corresponding authority option; and
updating the authority option according to a choice of the user.

In a particular embodiment the step of updating the corresponding authority option according to the configuration information corresponding to the current authority comprises:
querying a type to which a name of the current authority belongs, according to type information in the configuration information; and
when a type of the current authority is a ROOT type, determining whether the current authority has obtained a ROOT authority in ROOT authority management, and if the current authority has obtained the ROOT authority in the ROOT authority management, popping up a dialog box to inquire the user whether to update the corresponding authority option; and if the current authority does not obtain the ROOT authority in the ROOT authority management, prompting the user that the authority option is not permitted to be updated.

In a particular embodiment the method further comprises:
acquiring an accuracy of the authority choice in the authority result received from the server, and determining whether the accuracy of the authority choice is greater than a preset accuracy; and
when the accuracy of the authority choice is greater than the preset accuracy, updating the corresponding authority option according to the authority result; and
when the accuracy of the authority choice is smaller than the preset accuracy, not updating the corresponding authority option.

In a particular embodiment the method further comprises:
obtaining the authority use data of the user according to the updated authority option; and
returning the authority use data of the user to the server, for the server to store the authority use data of the user to a cloud.

According to a third aspect, the invention relates to a device for managing an authority, comprising:
an acquiring module configured to acquire authority use data of a user, the authority use data being at least one history use record of an authority option of the user that is recorded in a cloud;
a processing module configured to process the authority use data to obtain an authority result; and
a sending module configured to send the authority result obtained by the processing to a terminal, for the terminal to update a corresponding authority option.

According to the invention, the processing module comprises:
a processing submodule configured to process the authority use data in accordance with an authority choice, to obtain an authority confidence value and an initial authority choice; and
an adjustment submodule configured to adjust the initial authority choice according to the authority confidence value and a threshold value, to obtain the authority result, wherein the authority result includes a user ID, an application name, a name of an authority, and an authority choice.

In a particular embodiment the processing submodule comprises:
a de-noising unit configured to de-noising process the authority use data; and
a training unit configured to perform a SVM training on the de-noised authority use data respectively in accordance with two authority choices of permission and rejection in the authority option, to obtain the authority confidence value and the initial authority choice of the corresponding authority option.

In a particular embodiment the processing submodule comprises:
a de-noising unit configured to de-noising process the authority use data;
a clustering unit configured to perform cluster analysis on the authority use data with respect to the user in accordance with a cluster algorithm, to obtain a cluster type of the user; and
a training unit configured to, according to the cluster type of the user, perform a SVM training on each type of the user respectively in accordance with two choices of permission and rejection in the authority option, to obtain the authority confidence value and the initial authority choice corresponding to the authority option.

In a particular embodiment the processing submodule comprises:
a de-noising unit configured to de-noising process the authority use data;
a classification unit configured to classify the de-noised authority use data into training set data and testing set data in accordance with a classification ratio; and
a training unit configured to perform a SVM training on the training set data respectively in accordance with two authority choices of permission and rejection in the authority option, to obtain the initial authority choice and the authority confidence value corresponding to the authority option.

In a particular embodiment the device further comprises:
a determination module configured to determine correctness of the initial authority choice based on the testing set data, to obtain an accuracy of the authority choice.

In a particular embodiment the adjustment submodule comprises:
a comparison unit configured to respectively compare the authority confidence value corresponding to the authority option with the threshold value;
a first adjustment unit configured to, when the authority confidence value is smaller than the threshold value, adjust the initial authority choice to be an inquiry choice, as the authority result; and
a second adjustment unit configured to, when the authority confidence value is greater than or equal to the threshold value, use the initial authority choice as the authority result.

According to a fourth aspect, the invention relates to a device for managing an authority, comprising:
a receiving module configured to receive an authority result sent from a server, the authority result including a user ID, an application name, a name of an authority, and an authority choice and being obtained by processing authority use data which is at least one history use record of an authority option of the user that is recorded in a cloud;
an acquiring module configured to acquire configuration information of a corresponding authority according to the authority result; and
an update module configured to update a corresponding authority option according to the configuration information corresponding to the current authority.

In a particular embodiment the acquiring module comprises:
a first acquiring unit configured to acquire an application name in the authority result that is currently received; and
a second acquiring unit configured to acquire the configuration information of the current authority according to the application name.

In a particular embodiment the first acquiring unit comprises:
an acquiring subunit configured to acquire a user ID in the authority result that is currently received; and
a matching subunit configured to, when the user ID in the authority result matches a terminal user ID, acquire the application name.

In a particular embodiment the update module comprises:
a query unit configured to query a type to which a name of the current authority belongs, according to type information in the configuration information;
a determination unit configured to, when a type of the current authority is a ROOT type, determine whether the current authority has obtained a ROOT authority in ROOT authority management, and if the current authority has obtained the ROOT authority in the ROOT authority management, pop up a dialog box to inquire the user whether to update the corresponding authority option; and if the current authority does not obtain the ROOT authority in the ROOT authority management, prompt the user that the authority option is not permitted to be updated.

In a particular embodiment the device further comprises:
a determination module configured to acquire an accuracy of the authority choice in the authority result received from the server, determine whether the accuracy of the authority choice is greater than a preset accuracy, and when the accuracy of the authority choice is greater than the preset accuracy, update the corresponding authority option by the update module according to the authority result, and when the accuracy of the authority choice is smaller than the preset accuracy, not update the corresponding authority option.

In a particular embodiment the device further comprises:
a returning module configure to, according to the updated authority option, return the authority use data of the user to the server, for the server to store the authority use data of the user to a cloud.

According to a fifth aspect, the invention relates to a device for managing an authority, comprising:
a processor; and
a memory for storing instructions executed by the processor,
wherein the processor is configured to:
   acquire authority use data of a user;
   process the authority use data to obtain an authority result; and
   send the authority result obtained by the processing to a terminal, for the terminal to update a corresponding authority option.

According to a sixth aspect, the invention relates to a system for managing an authority, comprising:
any device for managing an authority according to the third aspect and any device for managing an authority according to the fourth aspect.

Technical solutions provided by the embodiments of the present disclosure may produce the following advantageous effects:
The authority use data of the user is acquired, and the authority use data is analyzed and processed to obtain the authority result, and then the authority result is sent to the terminal, for the terminal to automatically update the authority option of a corresponding application according to the received authority result, which may solve the problem that the user manually changes the authority as needed, and the corresponding authority can be automatically updated in time according to latest needs, which brings convenience for the authority settings of the application.

The cluster analysis is performed with respect to the user, and users who have high similarity in habit of setting the authority are clustered and analyzed, which may realize that different sorts of users set different authorities, such that the analyzed authority result is more targeted, and the update of the authority settings is performed more precisely with respect to the habits of the users, therefore the authority result is more conforming to requirements of the users.

By calculating the accuracy of the authority choice, an accuracy of an analysis result of the authority use data may be determined according to a test, and whether to update the authority result of the user may be determined according to the accuracy, thereby an error rate of updating the authority is decreased, and user experience is improved.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments being consistent with the disclosure and, together with the description, serve to explain the principles of the disclosure.
Fig. 1 is a flow chart showing a method for managing an authority, according to an exemplary embodiment;
Fig. 2 is a flow chart showing a method for managing an authority, according to an exemplary embodiment;
Fig. 3 is a diagram illustrating an interface after an authority option is updated according to an authority result;
Fig. 4 is a flow chart showing a method for managing an authority, according to an exemplary embodiment;
Fig. 5 is a detailed flow chart shown according to step S34 in Fig. 4;
Fig. 6 is a flow chart showing a method for managing an authority, according to an exemplary embodiment;
Fig. 7 is a detailed flow chart shown according to step S43 in Fig. 6;
Fig. 8 is a flow chart showing a method for managing an authority, according to an exemplary embodiment;
Fig. 9 is a detailed flow chart shown according to step S55 in Fig. 8;
Fig. 10 is a flow chart showing a method for managing an authority, according to an exemplary embodiment;
Fig. 11 is a detailed flow chart shown according to step S62 in Fig. 10;
Fig. 12-a is a diagram illustrating authority options related to fees and privacy authorities;

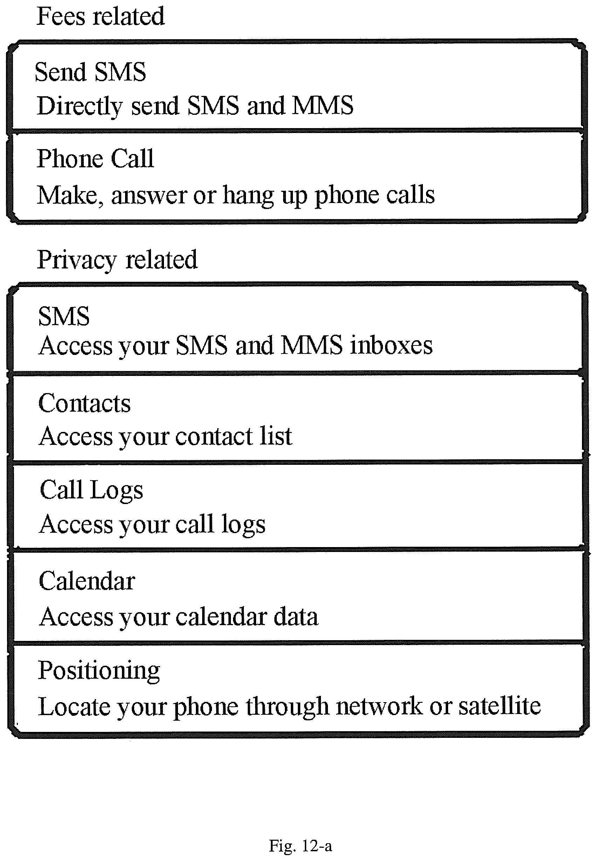

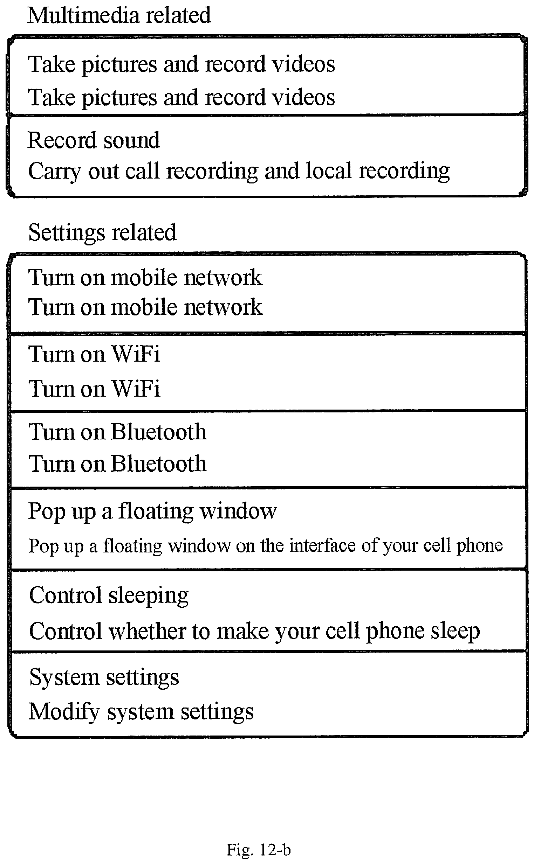

Fig. 12-b is a diagram illustrating authority options related to multimedia and settings authorities;

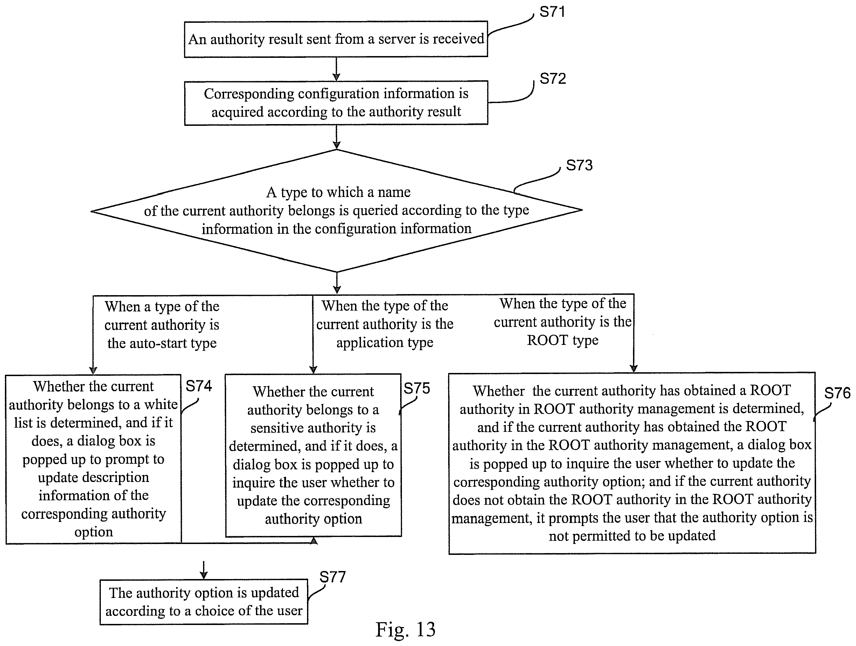

Fig. 13 is a flow chart showing a method for managing an authority, according to an exemplary embodiment;

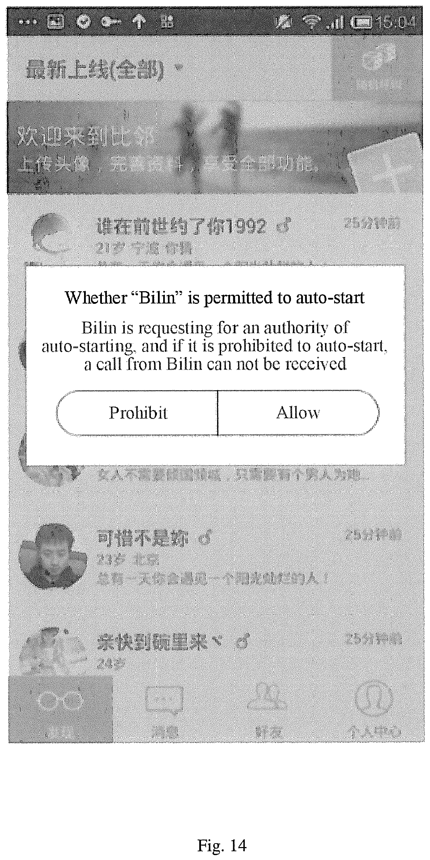

Fig. 14 is a diagram illustrating an interface of a white list application;

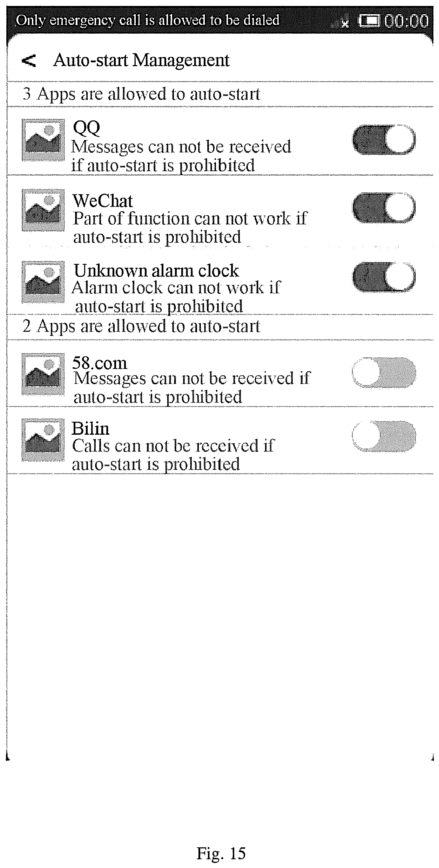

Fig. 15 is a diagram illustrating an interface of auto-start type authority management;

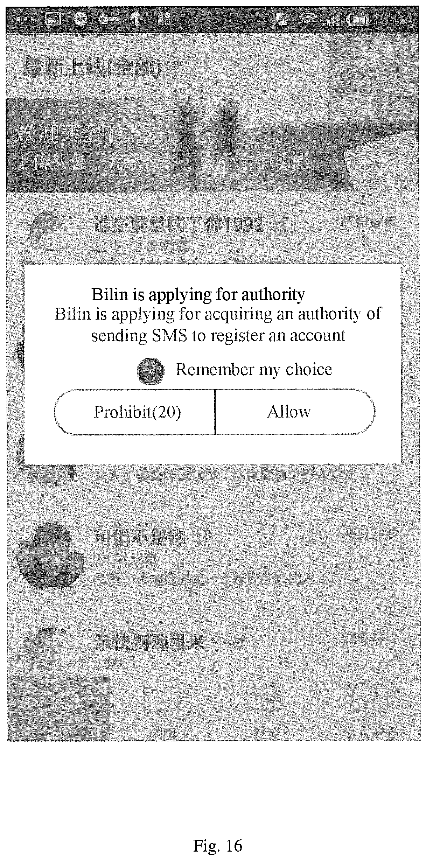

Fig. 16 is a diagram illustrating an interface of sensitive authority management;

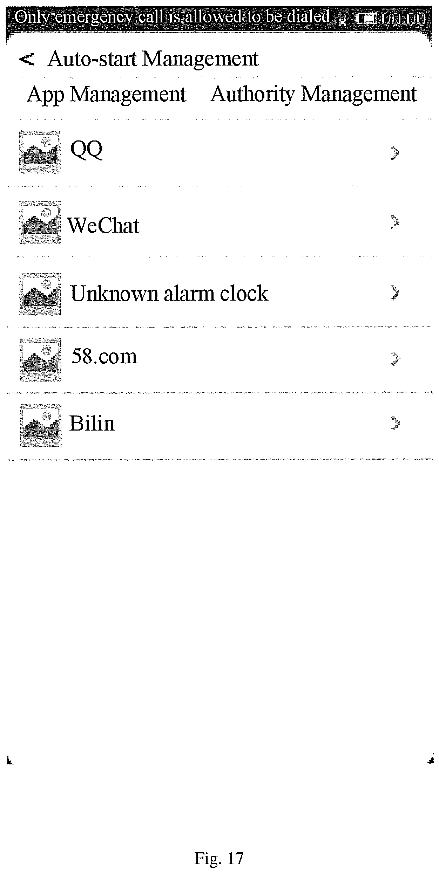

Fig. 17 is a diagram illustrating an interface of authority management of an application dimension;

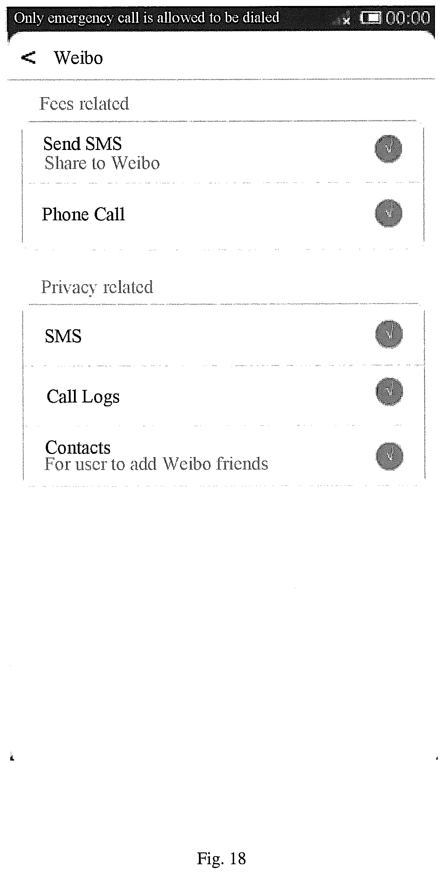

Fig. 18 is a diagram illustrating an interface of detailed information of an application authority;

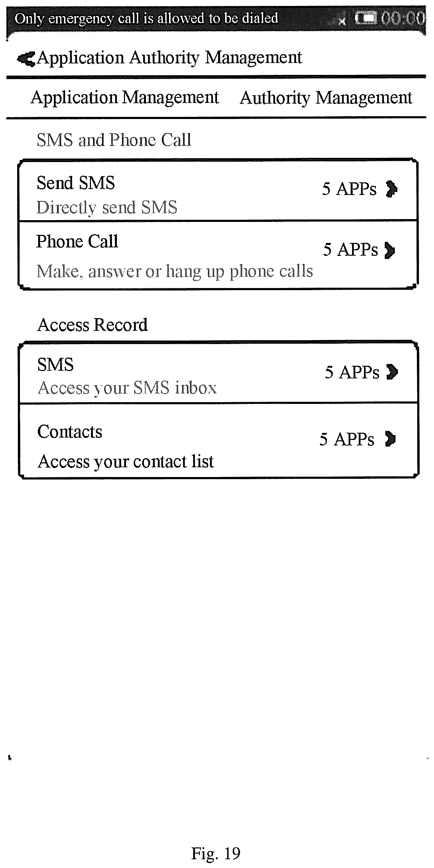

Fig. 19 is a diagram illustrating an interface of authority management of an authority dimension;

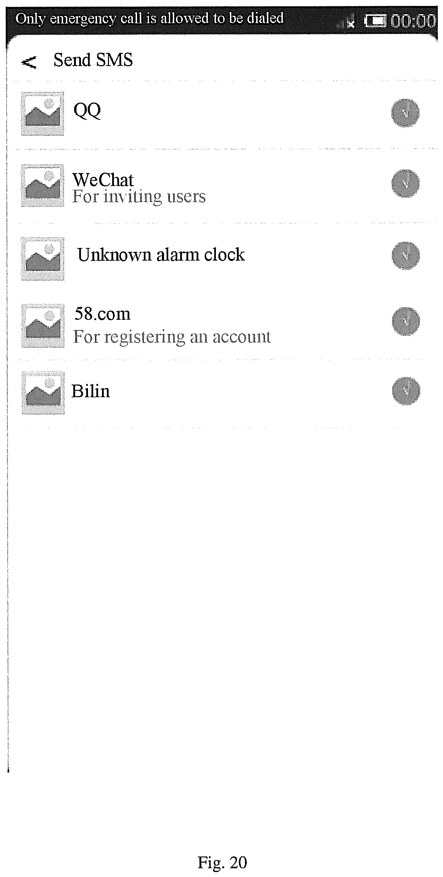

Fig. 20 is a diagram of detailed applications illustrated under management of an authority dimension;

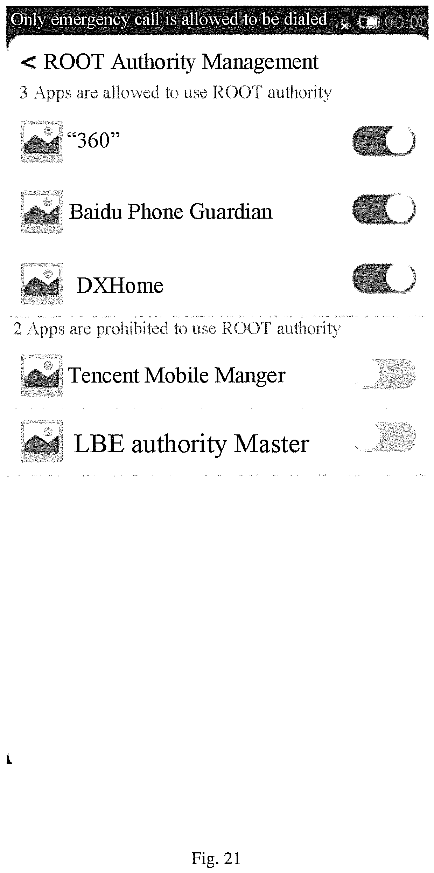

Fig. 21 is a diagram illustrating an interface of applications shown in a ROOT authority management page;

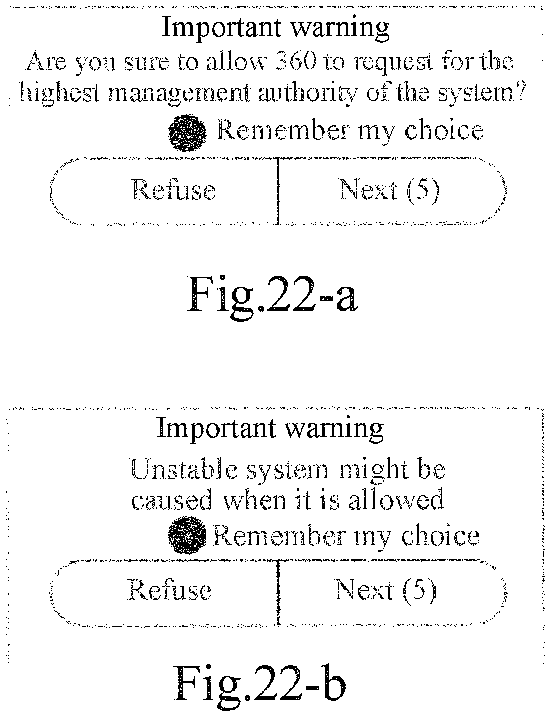

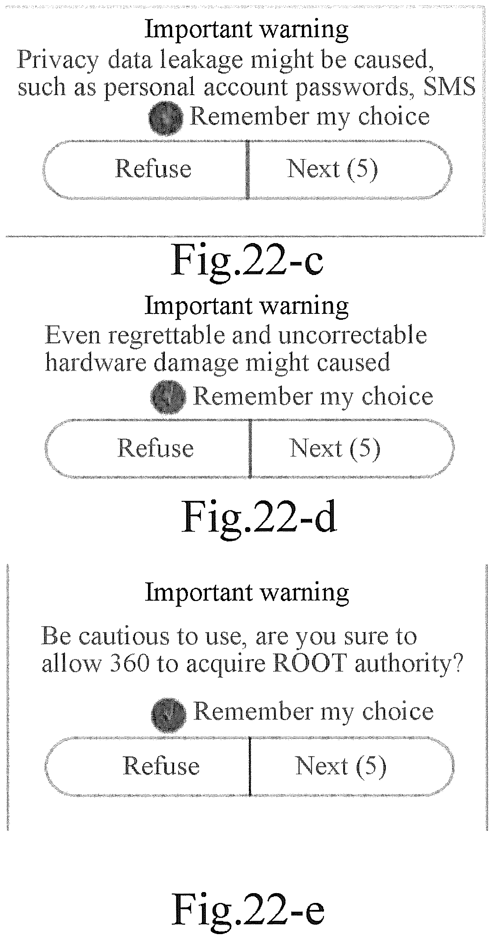

Fig. 22-a is a diagram illustrating an interface of a first step for applying a ROOT authority;
Fig. 22-b is a diagram illustrating an interface of a second step for applying a ROOT authority;
Fig. 22-c is a diagram illustrating an interface of a third step for applying a ROOT authority;
Fig. 22-d is a diagram illustrating an interface of a fourth step for applying a ROOT authority;
Fig. 22-e is a diagram illustrating an interface of a fifth step for applying a ROOT authority;

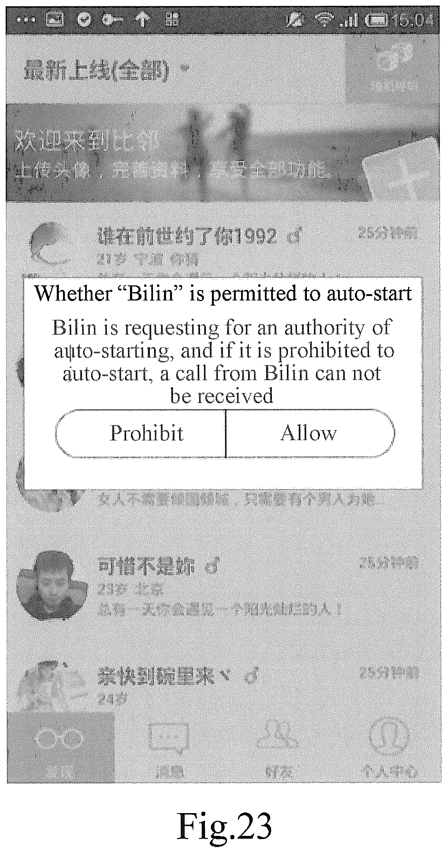

Fig. 23 is a diagram illustrating detailed information of an application in ROOT authority management;

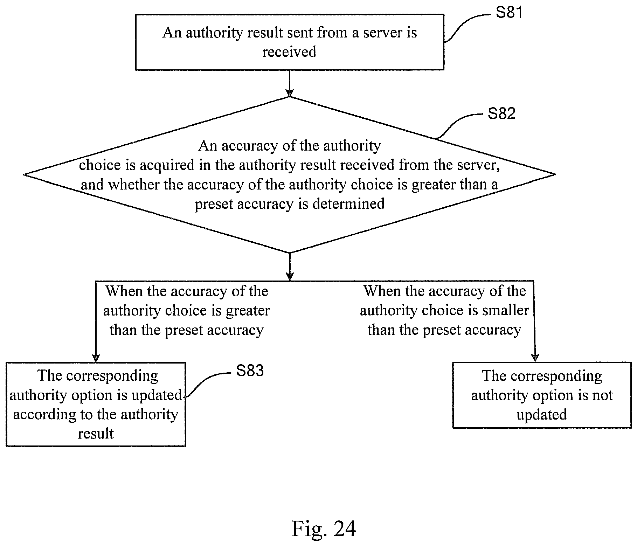

Fig. 24 is a flow chart showing a method for managing an authority, according to an exemplary embodiment;

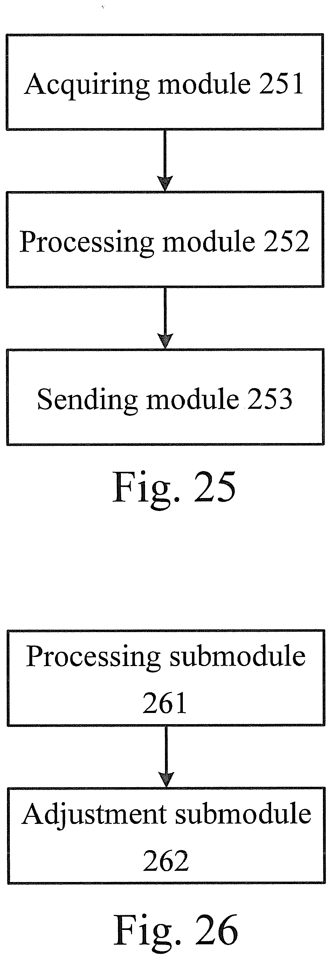

Fig. 25 is a block diagram illustrating a device for managing an authority, according to an exemplary embodiment;
Fig. 26 is an exemplary block diagram illustrating a processing module 252 in Fig. 25;

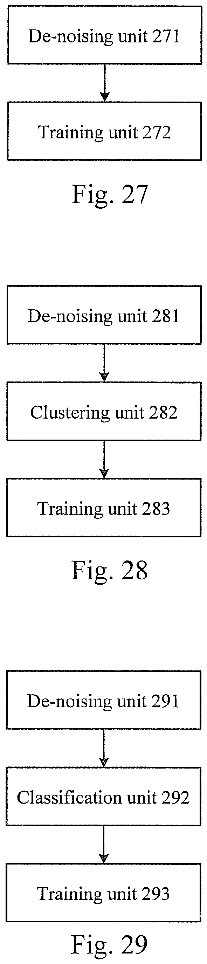

Fig. 27 is an exemplary block diagram illustrating a processing submodule 261 in Fig. 26;
Fig. 28 is an exemplary block diagram illustrating a processing submodule 261 in Fig. 26;
Fig. 29 is an exemplary block diagram illustrating a processing submodule 261 in Fig. 26;

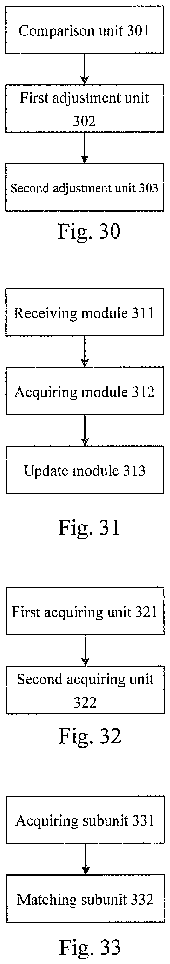

Fig. 30 is an exemplary block diagram illustrating an adjustment submodule 262 in Fig. 26;
Fig. 31 is a block diagram illustrating a device for managing an authority, according to an exemplary embodiment;
Fig. 32 is an exemplary block diagram illustrating an acquiring module 312 in Fig. 31;
Fig. 33 is an exemplary block diagram illustrating a first acquiring unit 321 in Fig. 32;

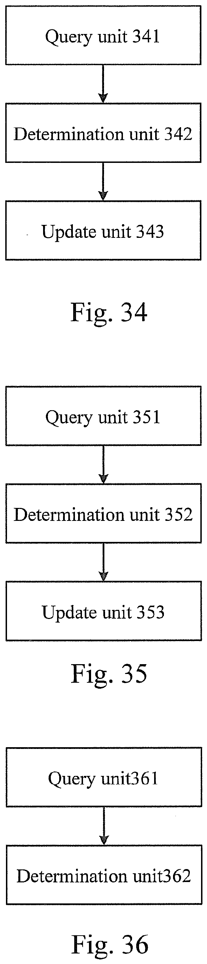

Fig. 34 is an exemplary block diagram illustrating an update module 313 in Fig. 31;
Fig. 35 is an exemplary block diagram illustrating an update module 313 in Fig. 31;
Fig. 36 is an exemplary block diagram illustrating an update module 313 in Fig. 31;

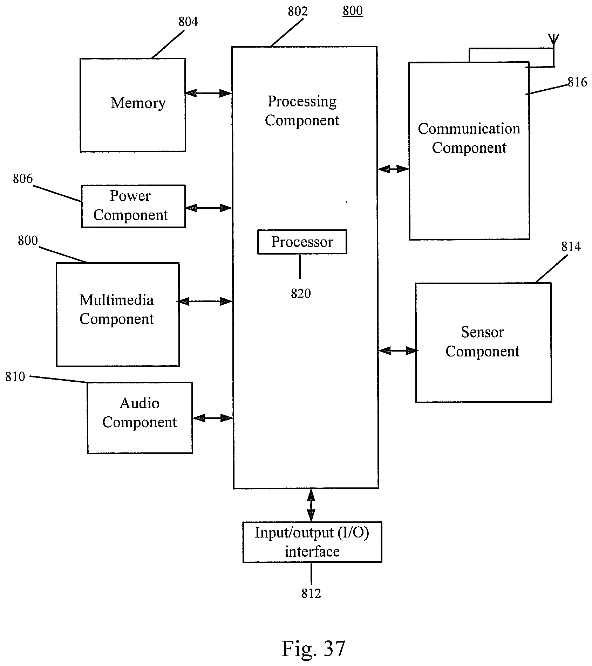

Fig. 37 is a block diagram illustrating a device (a general structure of a mobile terminal), according to an exemplary embodiment; and

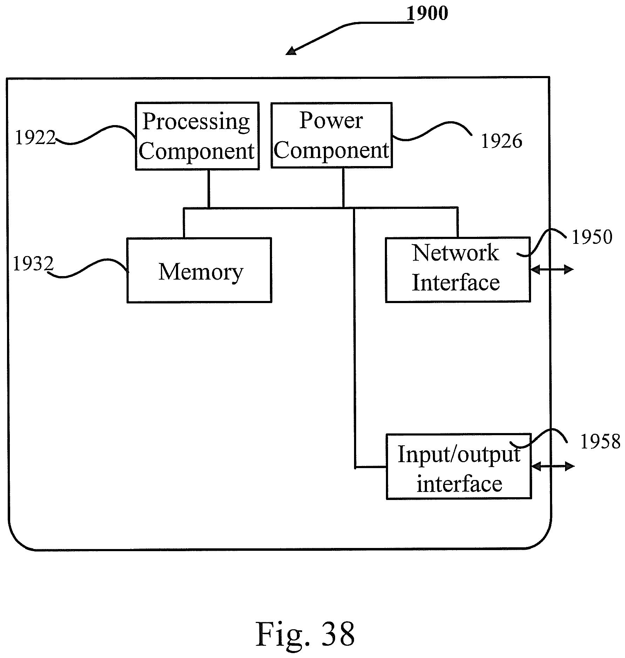

Fig. 38 is a block diagram illustrating a device (a general structure of a server), according to an exemplary embodiment.

### DETAILED DESCRIPTION

Exemplary embodiments will be described in details herein, with examples thereof shown in drawings. In the following descriptions, when the drawings are referred to, unless expressed otherwise, the same number in different drawings refers to the same or similar elements. The implementary manners described in the exemplary embodiments below do not represent all implementary manners that are consistent with the present disclosure. On the contrary, they are only examples of devices and methods that are consistent with some aspects of the present disclosure as recited in the claims.

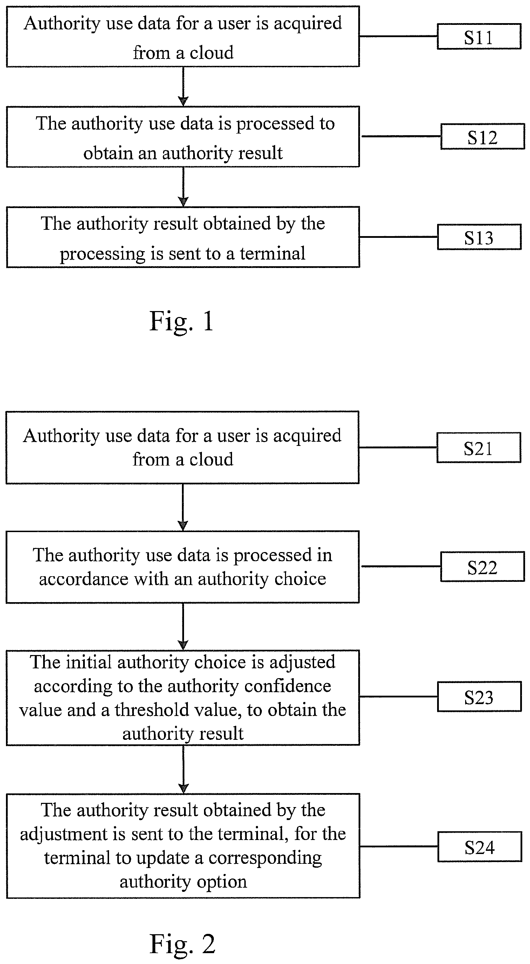

Fig. 1 is a flow chart showing a method for managing an authority, according to an exemplary embodiment. The method is applied in a server and includes the following steps.

In step S11, authority use data of a user is acquired. The authority use data refers to a history use record of an authority option of the user that is recorded in a cloud, wherein each history use record includes: a user ID, an application name, a name of an authority and an authority choice, and each history record may also include a modification record of authority settings.

In an embodiment, the authority use data of the user is acquired from the cloud.

In step S12, the authority use data is processed to obtain an authority result.

In an embodiment, the authority choice may include permission, rejection, inquiry and default, wherein the default refers to that the authority is never modified. Taking a privacy related application as an example, in SMS (Short Message Service), the name of the authority is accessing SMS inbox, which can be according to statistics of lots of records used by the user, wherein the authority choices of the authority of accessing SMS inbox include: permitting accessing SMS inbox, refusing accessing SMS inbox, enquiring the user before accessing SMS inbox, or no authority of accessing SMS inbox being set; and the records are classified and processed according to the authority choices, to obtain the authority result of the application of accessing SMS inbox.

In step S13, the authority result obtained by the processing is sent to a terminal, for the terminal to update a corresponding authority option.

In an embodiment, the authority result may include: a user ID, an application name, a name of an authority and an authority choice; and when the terminal receives the authority result sent from the server, the terminal performs corresponding update.

In the present embodiment, the authority use data of the user is acquired from the cloud, and the authority use data is analyzed and processed to obtain the authority result, and then the authority result is sent to the terminal for the terminal to automatically update the authority option of the corresponding application, which may solve the problem that the user manually changes the authority as need; moreover, because the authority use data of the user to be analyzed may be acquired from the cloud, the corresponding authority can be automatically updated in time according to latest needs, which brings convenience for the authority settings of the application.

Fig. 2 is a flow chart showing a method for managing an authority, according to an exemplary embodiment. The method is applied in a server and includes the following steps.

In step S21, authority use data of a user is acquired from a cloud. The authority use data refers to a history use record of an authority option of the user that is recorded in the cloud, wherein each history use record includes: a user ID, an application name, a name of an authority and an authority choice, and each history record may also include a modification record of authority settings.

In an embodiment, samples may be acquired from lots of history records used by the user in the cloud, the number of the acquired history records may be set, and the manner of setting the number of the acquired history records includes, but not limited to, setting records of the user during a period of time, a preset number of the history records; for example, the records used by the user during a period of time may be intercepted as the samples.

In step S22, the authority use data is processed in accordance with an authority choice, to obtain an authority confidence value and an initial authority choice.

In an embodiment, the authority choice may include permission, rejection, inquiry and default, wherein the default refers to that the authority is never modified. Taking a privacy related application as an example, in SMS (Short Message Service), the name of the authority is accessing SMS inbox, which can be according to statistics of lots of records used by the user, wherein the authority choices of the authority of accessing SMS inbox include: permitting accessing SMS inbox, refusing accessing SMS inbox, enquiring the user before accessing SMS inbox or no authority of accessing SMS inbox being set; and the records are classified and processed according to the authority choices, to obtain the authority result of the application of accessing SMS inbox.

It is to be explained that, the process for processing the authority use data in the step S22 may be online processing, or may be offline processing.

In step S23, the initial authority choice is adjusted according to the authority confidence value and a threshold value, to obtain the authority result. The authority confidence value refers to an index for representing reliability of the authority result, which is also known as degree of reliability, namely, when the records of the user are sampled to estimate a population parameter, due to randomness of samples of the authority data used by the user, conclusion thereof is always uncertain; by a statement method of probability, i.e., an interval estimation method in mathematical statistics, which means, with an estimated value and the population parameter within a certain allowable error range, how much the corresponding probability will be, the corresponding probability is known as the authority confidence value; wherein the threshold value refers to the lowest authority confidence value that meets the requirements.

In step S24, the authority result obtained by the adjustment is sent to the terminal, for the terminal to update a corresponding authority option.

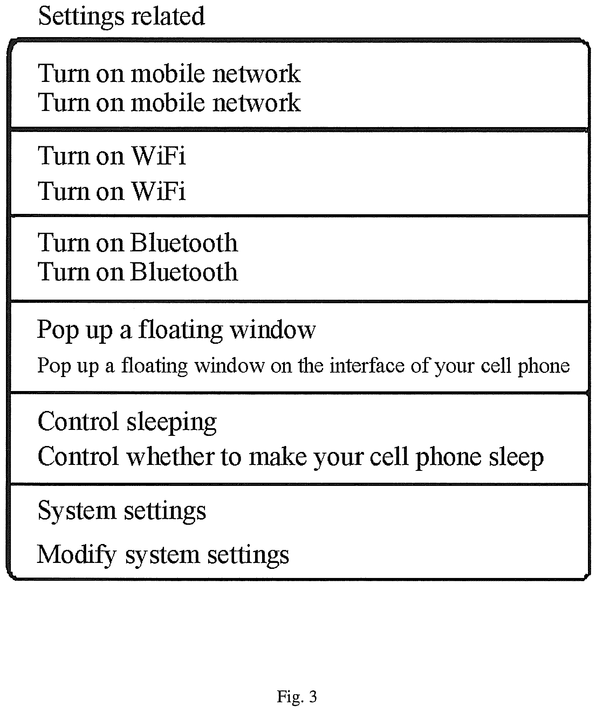

In an embodiment, the authority result may include: a user ID, an application name, a name of an authority and an authority choice; and when the terminal receives the authority result sent from the server, the terminal performs corresponding update. Taking the setting of settings related authority as an example, in the authority result, the authority options in a mobile network, WiFi, Bluetooth, a floating window, sleeping, and system settings are respectively turning on the mobile network, turning on WiFi, turning on Bluetooth, popping up the floating window, controlling sleeping, modifying the system settings, and the interface after the terminal updates the authority option according to the authority result is as shown in Fig. 3.

In the present embodiment, the authority use data of the user is acquired from the cloud, and the authority use data is analyzed and processed to obtain the authority result, and then the authority result is sent to the terminal, for the terminal to automatically update the authority option of the corresponding application, which may solve the problem that the user manually changes the authority as need; moreover, because the authority use data of the user to be analyzed may be acquired from the cloud, the corresponding authority can be automatically updated in time according to latest needs, which brings convenience for the authority settings of the application.

The above described methods provided by the embodiments of the present disclosure will be explained hereinafter, by taking that after authority use data of a user is acquired, the authority use data is analyzed and processed in accordance with two authority choices of "permission" and "rejection" as an example.

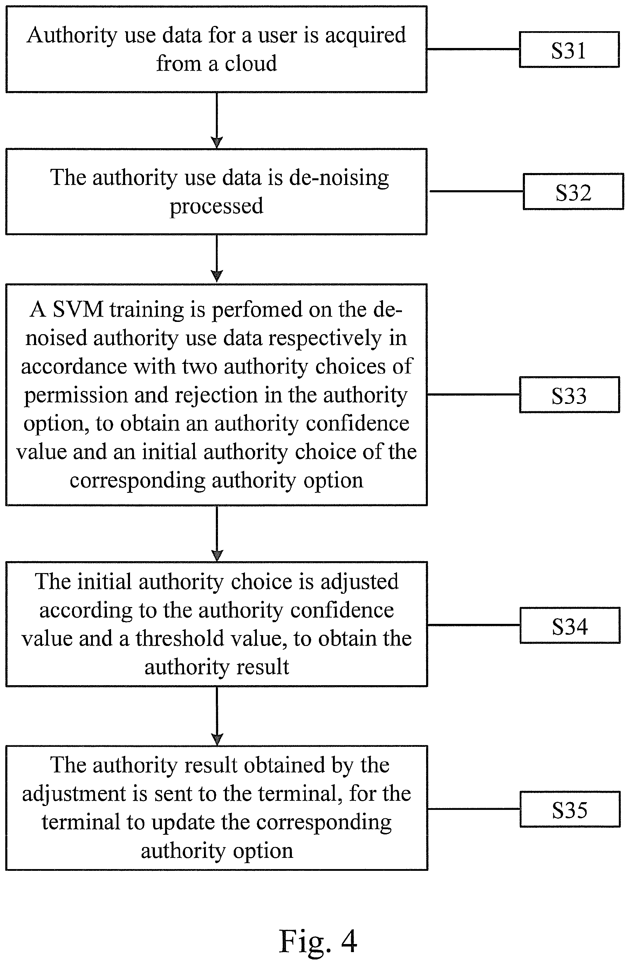

Fig. 4 is a flow chart showing a method for managing an authority, according to an exemplary embodiment. The method is applied in a server, and specifically includes the following steps.

In step S31, authority use data of a user is acquired from a cloud. The authority use data refers to a history use record of an authority option of the user that is recorded in a cloud, wherein each history use record includes: a user ID, an application name, a name of an authority and an authority choice, and each history record may also include a modification record of authority settings. In the present embodiment, the process for acquiring the authority use data of the user from the cloud is the same as the step S21 in the above embodiment, which will not be redundantly described herein.

In step S32, the authority use data is de-noising processed. The authority use data being de-noising processed refers to removing noise data and invalid data, which may use a de-noising manner based on wavelet analysis or an offline curve de-noising manner, and the specific de-noising manner is not limited in this solution.

In step S33, a SVM training is performed on the de-noised authority use data respectively in accordance with two authority choices of permission and rejection in the authority option, to obtain an authority confidence value and an initial authority choice of the corresponding authority option. Wherein the SVM (Support Vector Machine) is a trainable machine learning method.

In an embodiment, the de-noised authority use data is applied to a linear SVM training classifier f: (user, app, permission) → decision, wherein "user" refers to the user, "app" refers to the application name, "permission" refers to whether the authority is permitting to be accessed while training, wherein the training is performed only with respect to the two choices of "permission" and "rejection" and "decision" refers to the obtained initial authority choice of the user; according to the linear SVM training classifier f: (user, app, permission) → decision, the initial authority choice and the authority confidence value of the user are obtained; and it is to be explained that, the training is performed only in accordance with the two choices of "permission" and "rejection" and in the obtained training result, the result of the initial authority choice only includes "permission" and "rejection" wherein the authority confidence value refers to an index for representing reliability of the authority result.

In step S34, the initial authority choice is adjusted according to the authority confidence value and a threshold value, to obtain the authority result. The authority result may include: a user ID, an application name, a name of an authority and an authority choice.

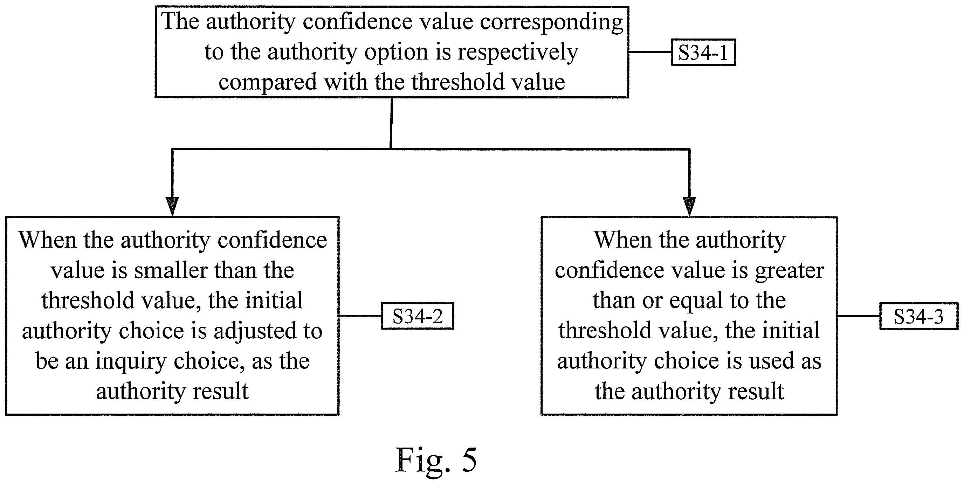

In an embodiment, as shown in Fig. 5, the step S34 includes the following procedures:
In step S34-1, the authority confidence value corresponding to the authority option is compared with the threshold value.

In the present embodiment, the threshold value may be controlled by setting a total inquiry ratio. For example, the threshold value is controlled by limiting the authority of the inquiry to no more than 10% of the total authority.

In step S34-2, when the authority confidence value is smaller than the threshold value, the initial authority choice is adjusted to be an inquiry choice, as the authority result. For example, when the authority confidence value is very low and lower than the threshold value that is set, the authority choice of the authority option is set as inquiry. For example, when the threshold value is 0.3, and the authority confidence value is 0.25, the initial authority choice is adjusted to be the inquiry choice, as the final authority result. It is to be explained that, during training, since the training is performed only in accordance with the two choices of "permission" and "rejection" in the obtained training result, the result of the initial authority choice only includes "permission" and "rejection" and after the confidence value is compared with the threshold value and the adjustment is made, the authority choice when the confidence value is smaller than the threshold value is adjusted to be "inquiry".

In step S34-3, when the authority confidence value is greater than or equal to the threshold value, the initial authority choice is used as the authority result. For example, when the threshold value is 0.3, and the authority confidence value is 0.5, the initial authority choice is used as the final authority result. It is to be explained that, during training, since the training is performed only in accordance with the two choices of "permission" and "rejection" in the obtained training result, the result of the initial authority choice only includes "permission" and "rejection".

In step S35, the authority result obtained by the adjustment is sent to the terminal, for the terminal to update the corresponding authority option.

In an embodiment, the authority result may include: a user ID, an application name, a name of an authority and an authority choice; and when the terminal receives the authority result sent from the server, the terminal performs corresponding update. Taking the setting of settings related authority as an example, in the authority result, the authority options in a mobile network, WiFi, Bluetooth, a floating window, sleeping, and system settings are respectively turning on the mobile network, turning on WiFi, turning on Bluetooth, popping up the floating window, controlling sleeping, modifying the system settings.

In the present embodiment, a SVM training is performed on the authority use data of the user that is acquired from the cloud in accordance with permission and rejection, to obtain the authority result, and the trained authority result is sent to the terminal, for the terminal to automatically update the corresponding authority option according to the received authority result, which may not only solve the problem that the user manually changes the authority as needed, but also can obtain more accurate authority result, thus user experience is improved, which brings convenience for the authority settings of the application.

The above described methods provided by the embodiments of the present disclosure will be explained hereinafter, by taking a process for classifying and processing authority use data of a user that is acquired in accordance with the same authority, but different use habits of the users, as an example.

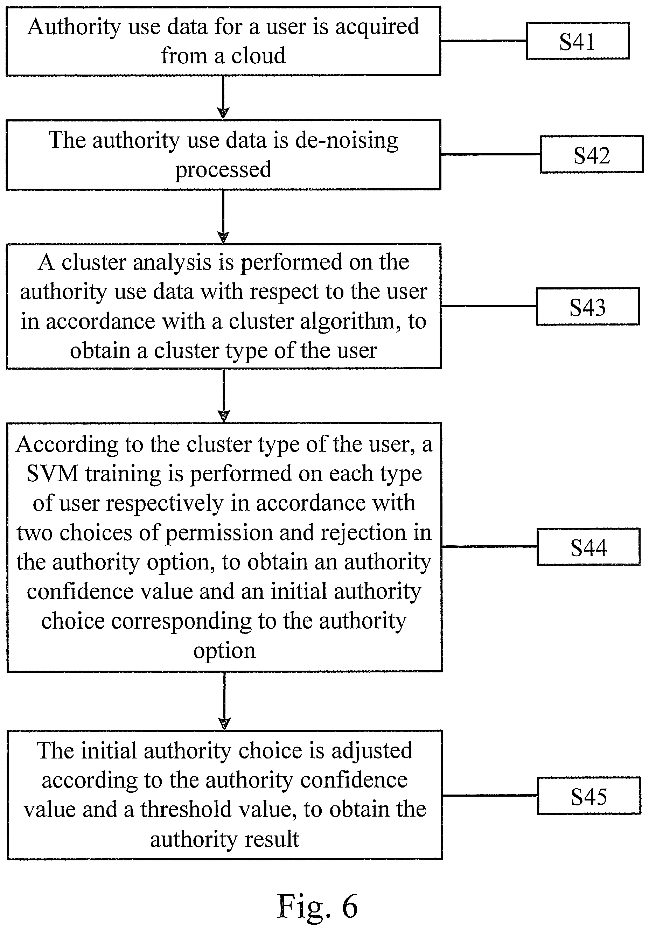

Fig. 6 is a flow chart showing a method for managing an authority, according to an exemplary embodiment. The method is applied in a server, and specifically includes the following steps.

In step S41, authority use data of a user is acquired from a cloud. The authority use data refers to a history use record of an authority option of the user that is recorded in the cloud, wherein each history use record includes: a user ID, an application name, a name of an authority and an authority choice, and each history record may also include a modification record of authority settings.

In the present embodiment, the process for acquiring the authority use data of the user from the cloud refers to the step S21 in the above embodiment, which will not be redundantly described herein.

In step S42, the authority use data is de-noising processed. The authority use data being de-noising processed refers to removing noise data and invalid data, which may use a de-noising manner based on wavelet analysis or an offline curve de-noising manner, and the specific de-noising manner is not limited in this solution.

In step S43, a cluster analysis is performed on the authority use data with respect to the user in accordance with a cluster algorithm, to obtain a cluster type of the user.

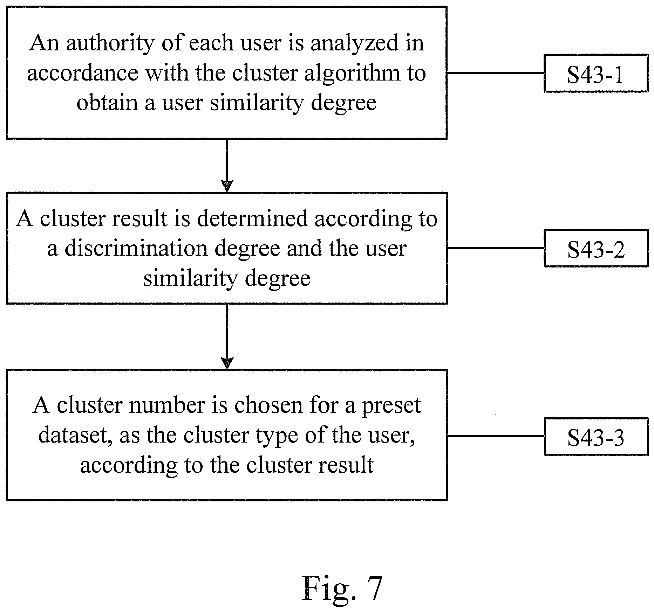

In an embodiment, the cluster analysis is performed on the authority use data with respect to the user in accordance with the cluster algorithm, as shown in Fig. 7, procedures include the following steps.

In step S43-1, an authority of each user is analyzed in accordance with the cluster algorithm to obtain a user similarity degree.

For example, it is assumed that there are n number of authorities, each user may be represented as a n-dimensional vector, clustering is performed using K-means method, to obtain an Euclidean distance of the user, wherein the Euclidean distance represents the user similarity degree.

In step S43-2, a cluster result is determined according to a discrimination degree and the user similarity degree.

In step S43-3, a cluster number is chosen for a preset dataset, as the cluster type of the user, according to the cluster result.

In the above described steps, it is to be explained that, for the user that is not in off-line data, the authority can only be determined by using a general classifier at first, and after a portion of data is collected while a period of time is elapsed, the type to which the use belongs may be determined, and then the authority may be determined by using a classifier of that type.

In step S44, according to the cluster type of the user, a SVM training is performed on each type of the user respectively in accordance with two choices of permission and rejection in the authority option, to obtain an authority confidence value and an initial authority choice corresponding to the authority option.

The SVM (Support Vector Machine) is a trainable machine learning method.

In an embodiment, the classified authority use data is applied to a corresponding linear SVM training classifier f: (user, app, permission) → decision, wherein "user" refers to the user, "app" refers to the application name, "permission" refers to whether the authority is permitting to be accessed while training, wherein the training is performed only with respect to the two choices of "permission" and "rejection" and "decision" refers to the obtained initial authority choice of the user; according to the linear SVM training classifier f: (user, app, permission) → decision, the initial authority choice and the authority confidence value of the user are obtained; and it is to be explained that, the training is performed only in accordance with the two choices of "permission" and "rejection" in the obtained training result, the result of the initial authority choice only includes "permission" and "rejection" wherein the authority confidence value refers to an index for representing reliability of the authority result.

In step S45, the initial authority choice is adjusted according to the authority confidence value and a threshold value, to obtain the authority result. The authority result may include: a user ID, an application name, a name of an authority and an authority choice.

In an embodiment, the implementation process may refer to the procedures shown in the steps S34-1 to S34-3 in the above embodiment, which will not be redundantly described herein.

In step S46, the authority result obtained by the adjustment is sent to the terminal, for the terminal to update the corresponding authority option. The authority result may include: a user ID, an application name, a name of an authority and an authority choice; and when the terminal receives the authority result sent from the server, the terminal performs corresponding update. Taking the setting of settings related authority as an example, in the authority result, the authority options in a mobile network, WiFi, Bluetooth, a floating window, sleeping, and system settings are respectively turning on the mobile network, turning on WiFi, turning on Bluetooth, popping up the floating window, controlling sleeping, modifying the system settings.

In the embodiments of the present disclosure, the cluster analysis is performed with respect to the user, and users who have high similarity in habit of setting the authority are clustered and analyzed, which may realize that different sorts of users set different authorities, such that the analyzed authority result is more targeted, and the update of the authority settings is performed more precisely with respect to the habits of the users, therefore the authority result is more conforming to requirements of the users.

The above described methods provided by the embodiments of the present disclosure will be explained hereinafter, by taking a process for calculating an accuracy of an initial authority result that is obtained after the acquired authority use data of the user is classified and processed as an example.

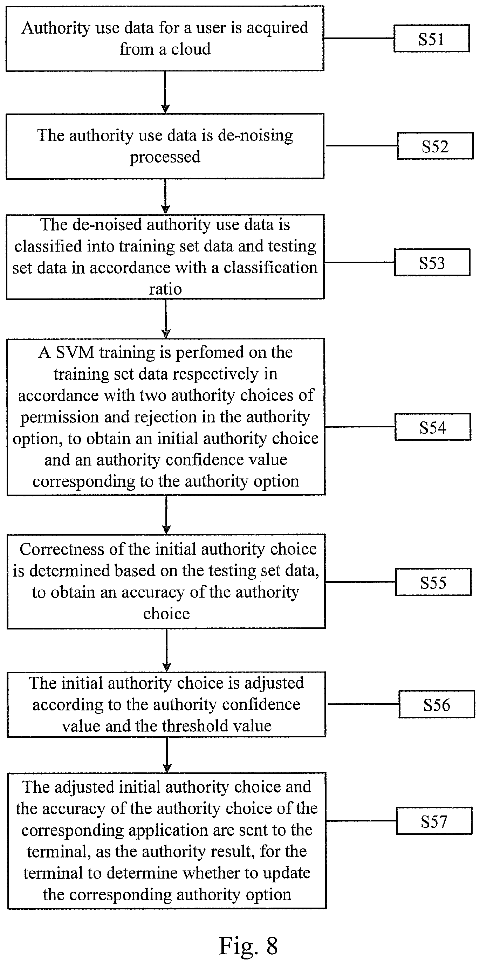

Fig. 8 is a flow chart showing a method for managing an authority, according to an exemplary embodiment. The method is applied in a server, and specifically includes the following steps.

In step S51, authority use data of a user is acquired from a cloud. The authority use data refers to a history use record of an authority option of the user that is recorded in the cloud, wherein each history use record includes: a user ID, an application name, a name of an authority and an authority choice, and each history record may also include a modification record of authority settings.

In the present embodiment, the process for acquiring the authority use data of the user from the cloud refers to the step S21 in the above embodiment, which will not be redundantly described herein.

In step S52, the authority use data is de-noising processed. The authority use data being de-noising processed refers to removing noise data and invalid data, which may use a de-noising manner based on wavelet analysis or an offline curve de-noising manner, and the specific de-noising manner is not limited in this solution.

In step S53, the de-noised authority use data is classified into training set data and testing set data in accordance with a classification ratio. The classification ratio is specifically set according to requirements of the testing set data and the training set data. For example, data of 90% users as well as data of 20% APP of the remaining 10% users are used as the training set data, and the other 80% APP of the remaining 10% users are used as the testing set data; and data may be randomly assigned.

In step S54, a SVM training is performed on the training set data respectively in accordance with two authority choices of permission and rejection in the authority option, to obtain an initial authority choice and an authority confidence value corresponding to the authority option. The SVM (Support Vector Machine) is a trainable machine learning method.

In an embodiment, the de-noised authority use data is applied to a linear SVM training classifier f: (user, app, permission) → decision, wherein "user" refers to the user, "app" refers to the application name, "permission" refers to whether the authority is permitting to be accessed while training, wherein the training is performed only with respect to the two choices of "permission" and "rejection" and "decision" refers to the obtained initial authority choice of the user; according to the linear SVM training classifier f: (user, app, permission) → decision, the initial authority choice and the authority confidence value of the user are obtained; and it is to be explained that, the training is performed only in accordance with the two choices of "permission" and "rejection" in the obtained training result, the result of the initial authority choice only includes "permission" and "rejection" wherein the authority confidence value refers to an index for representing reliability of the authority result.

In step S55, correctness of the initial authority choice is determined based on the testing set data, to obtain an accuracy of the authority choice.

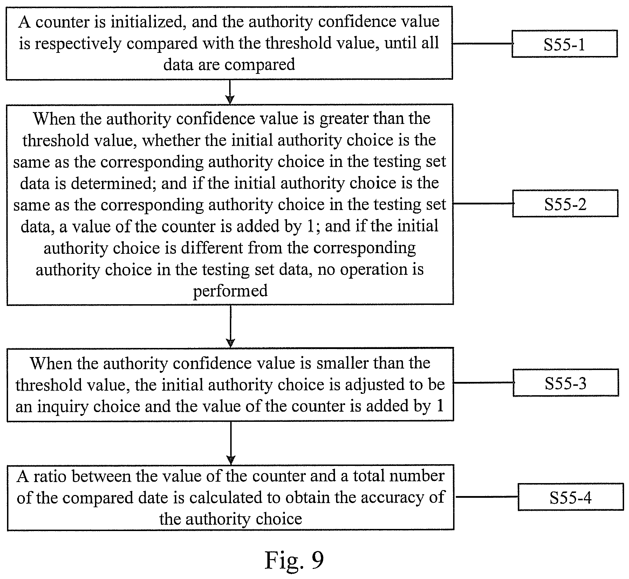

In an embodiment, as shown in Fig. 9, the step S55 includes the following steps.

In step S55-1, a counter is initialized, and the authority confidence value is respectively compared with the threshold value, until all data are compared.

In step S55-2, when the authority confidence value is greater than the threshold value, whether the initial authority choice is the same as the corresponding authority choice in the testing set data is determined; and if the initial authority choice is the same as the corresponding authority choice in the testing set data, a value of the counter is added by 1; and if the initial authority choice is different from the corresponding authority choice in the testing set data, no operation is performed.

In step S55-3, when the authority confidence value is smaller than the threshold value, the initial authority choice is adjusted to be an inquiry choice and the value of the counter is added by 1.

In step S55-4, a ratio between the value of the counter and a total number of the compared date is calculated to obtain the accuracy of the authority choice.

In step S56, the initial authority choice is adjusted according to the authority confidence value and the threshold value.

In an embodiment, procedures of step S56 refer to the steps S34-1 to S34-3 in the above embodiment, which will not be redundantly described herein.

In step S57, the adjusted initial authority choice and the accuracy of the authority choice of the corresponding application are sent to the terminal, as the authority result, for the terminal to determine whether to update the corresponding authority option. The authority result may include: a user ID, an application name, a name of an authority, an authority choice and an accuracy of the authority choice; and when the terminal receives the authority result sent from the server, the terminal performs corresponding update. Taking the setting of settings related authority as an example, in the authority result, the authority options in a mobile network, WiFi, Bluetooth, a floating window, sleeping, and system settings are respectively turning on the mobile network, turning on WiFi, turning on Bluetooth, popping up the floating window, controlling sleeping, modifying the system settings.

In the present embodiment, by calculating the accuracy of the authority choice, an accuracy of an analysis result of the authority use data may be determined according to a test, and whether to update the authority result of the user may be determined according to the accuracy, thereby an error rate of updating the authority is decreased, and user experience is improved.

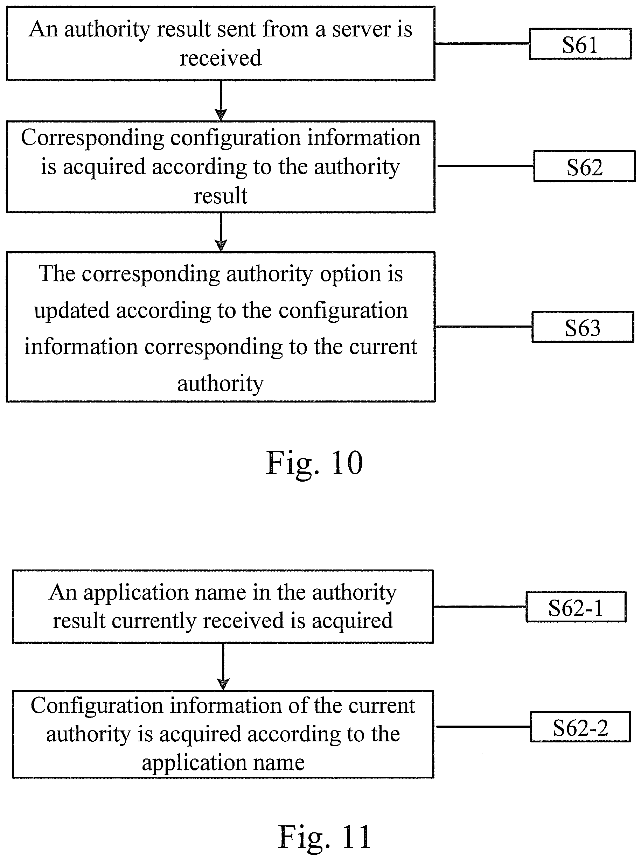

Fig. 10 is a flow chart showing a method for managing an authority, according to an exemplary embodiment. The method is applied in a terminal, and specifically includes the following steps.

In step S61, an authority result sent from a server is received.

The authority result may include: a user ID, an application name, a name of an authority and an authority choice, wherein the user ID is key content for judging and solely identifying the user, which may be a cell phone number, a user name of a registered user, or other key contents that may solely identify the user, such as a Mi-talk number; the application name refers to a program or an application that may set an authority, which not only includes applications used by the user such as Mi-talk, WeChat and the like, as well as applicants that auto-start in a system, but also includes system programs owned by the system while installing, such as Computer, On-line neighbor and the like; the authority choice includes permission, rejection, inquiry and default; taking a privacy related application as an example, in SMS (Short Message Service), the name of the authority is accessing SMS inbox, which can be according to statistics of lots of records used by the user, and an application that is permitted accessing SMS inbox, an application that is rejected accessing SMS inbox, an application that needs to enquiry the user before accessing SMS inbox or an application for which no authority of accessing SMS inbox is set are classified and processed in accordance with the authority choices, to obtain the authority result of the application of accessing SMS inbox.

In step S62, corresponding configuration information is acquired according to the authority result. The configuration information includes: type information of an authority and setting information of the corresponding authority, wherein the type information includes: an auto-start type, an application type and a ROOT type, and the setting information includes: sensitive information and description information of the authority.

In an embodiment, a corresponding authority option is updated according to the authority result. As shown in Fig. 11, procedures include steps S62-1 to S62-2, which are specifically as follows.

In step S62-1, an application name in the authority result currently received is acquired.

In an embodiment, the step S62-1 may further include: acquiring a user ID in the authority result that is currently received; and when the user ID in the authority result matches a terminal user ID, acquiring the application name; and when the user ID in the authority result does not match the terminal user ID, the operation is ended.

In step S62-2, configuration information of the current authority is acquired according to the application name. The configuration information includes: type information of the authority and setting information of the corresponding authority, wherein the type information includes: an auto-start type, an application type and a ROOT type, and the setting information includes: sensitive information and description information of the authority. For example, a sensitive authority is reading SMS, the authority result is "permitting Calendar reading contents of SMS", and when the authority is acquired, according to the setting information, it may prompt the user whether a checked state of "remember my choice" is required, in the sensitive information, for purpose of privacy, generally, un-checking is set by default.

In step S63, the corresponding authority option is updated according to the configuration information corresponding to the current authority.

The authority option refers to an option for choosing an authority by the user, as the interface shown in Fig. 12-a, the option includes: a fees related authority, a privacy related authority, and as the interface shown in Fig. 12-b, the option includes: a multimedia related authority and a settings related authority. Taking a contact record of the privacy related authority as an example, in accessing your contact list, the authority option may permit applications to access the contact list, or refuse the applications to access the contact list, or may permit a portion of the applications to access the contact list, or refuse other applications to access the contact list.

In the embodiments of the present disclosure, by receiving the authority result sent from the server, the configuration information is acquired according to the authority result, and the authority option is updated according to the configuration information, which may solve the problem that the user manually changes the authority as needed, and the corresponding authority can be automatically updated in time according to latest needs, which brings convenience for the authority settings of the application.

The above described methods provided by the embodiments of the present disclosure will be explained hereinafter, by taking performing a corresponding update operation in accordance with different authority types in updating a corresponding authority option according to the authority result as an example.

Fig. 13 is a flow chart showing a method for managing an authority, according to an exemplary embodiment. The method is applied in a terminal, and specifically includes the following steps.

In step S71, an authority result sent from a server is received.

The authority result may include: a user ID, an application name, a name of an authority and an authority choice, wherein the user ID is key content for judging and solely identifying the user, and the application name refers to a program or an application that may set an authority, which not only includes applications used by the user such as Mi-talk, WeChat and the like, as well as applicants that auto-start in a system, but also includes system programs owned by the system while installing such as Computer, On-line neighbor and the like; the authority choice includes permission, rejection, inquiry and default.

In step S72, corresponding configuration information is acquired according to the authority result. The configuration information includes: type information of an authority and setting information of the corresponding authority, wherein the type information includes: an auto-start type, an application type and a ROOT type, and the setting information includes: sensitive information and description information of the authority.

In step S73, a type to which a name of the current authority belongs is queried according to the type information in the configuration information, and when a type of the current authority is the auto-start type, step S74 is performed; when the type of the current authority is the application type, step S75 is performed; and when the type of the current authority is the ROOT type, step S76 is performed.

In step S74, whether the current authority belongs to a white list is determined, and if it does, a dialog box is popped up to prompt to update description information of a corresponding authority option. The white list refers to an application name list which is predefined and which may automatically pop up a window to enquiry the user when it is started for the first time.

In an embodiment, as the interface shown in Fig. 14, when the white list includes an application "Bilin", and Bilin is started for the first time, a dialog box may be popped up to prompt information whether "Bilin" is permitted to auto-start, wherein the description information is that: Bilin is requesting for an authority of auto-starting, and if it is prohibited to auto-start, a call from Bilin can not be received.

When the type of the authority is the auto-start type, in an auto-start management authority page, all applications are present in one page, and controlled by switches. Additionally, after the switch is clicked, the page is not changed immediately until the page is entered next time. As the interface shown in Fig. 15, applications in an auto-start management page include QQ, WeChat, unknown alarm clock, 58.com and Bilin, wherein the applications that are permitted to auto-start include QQ, WeChat and unknown alarm clock, and the applications that are prohibited to auto-start include 58.com and Bilin. Permission or prohibition is controlled by the switch on the right, and when 58.com and Bilin are prohibited to auto-start, the page is not changed immediately until the page is entered next time.

After the step S74 is performed, step S77 is performed.

In step S75, whether the current authority belongs to a sensitive authority is determined, and if it does, a dialog box is popped up to inquire the user whether to update the corresponding authority option. The sensitive authority refers to that usually when an application is installed, the application will require some authorities, and the application mostly requires authorities that involve personal privacy and information security problem such as a network authority, a SMS authority, and an authority of reading contacts; for instance, in a MIUI system, pop-up inquiry is carried out with respect to sensitive authorities of an application that is installed through a non-Mi channel, or an application that is not operated. As shown in Fig. 16, when "Bilin" applies for acquiring an authority of sending SMS to register an account, since the authority of "sending SMS" is the sensitive authority, with respect to the sensitive authority, a widow may be popped up to enquiry whether unchecking "remember my choice" is set by default. Additionally, sensitivity may be graded, and with respect to a general sensitive authority, the window is popped up to enquiry whether checking "remember my choice" is set by default, while with respect to a non-sensitive authority, permission is set by default.

When the type of the authority is the application type, in an application management authority page, it is presented in accordance with an application management dimension and an authority management dimension, presentation in accordance with the application dimension is set by default. In accordance with the application dimension, as shown in Fig. 17, application names are displayed in application management, detailed pages of the application management may be presented by clicking right arrows on the right of the applications, which include authorities of the APPs, and the purpose of using the authority by the APP is indicated below the authority; a single function bar on the right can be clicked and popped up for the user to choose whether to inquire/permit/refuse, wherein the detailed page is shown in Fig. 18, an APP of Weibo is taken as an example, the authorities of Weibo include sending SMS, phone call, SMS, call logs, contacts, wherein the purpose of using the authority of sending SMS by Weibo, which is indicated below the authority of sending SMS, is for sharing the Weibo; and when it is presented in accordance with the authority dimension, the page presents all authorities and shows applications included by the authorities, and as shown in Fig. 19, the authorities presented in the page include sending SMS, phone call, SMS, contacts, for example, "5 Apps" is displayed on the right of the authority of sending SMS, and applications under the authority may be presented by clicking the right arrow on the right of the authority management, and as shown in Fig. 20, the applications under the authority of sending SMS include QQ, WeChat, unknown alarm clock, 58.com and Bilin.

After the step S75 is performed, step S77 is performed.

In step S76, whether the current authority has obtained a ROOT authority in ROOT authority management is determined, and if the current authority has obtained the ROOT authority in the ROOT authority management, a dialog box is popped up to inquire the user whether to update the corresponding authority option; and if the current authority does not obtain the ROOT authority in the ROOT authority management, it prompts the user that the authority option is not permitted to be updated.

In an embodiment, when the type of the authority is the ROOT type, the ROOT authority may be modified in a ROOT authority management page. Only applications that have applied for the ROOT authority are presented in the ROOT authority management page, and it is default that the authority is off. As shown in Fig. 21, in the ROOT authority management page, the applications include "360" Baidu Phone Guardian, DXHome, Tencent Mobile Manger and LBE authority Master. If an off-switch is clicked, the ROOT authority of the application may be turned off immediately, and if an on-switch is clicked, a confirmation pop-up window is presented. Five steps of prompts for applying for the ROOT authority are five steps shown in Figs. 22-a to 22-e, wherein if a third party application applies for the ROOT authority in its application, the user is prompted by a "toast" that the applicant is prohibited using the ROOT authority. As shown in Fig. 23, when Bilin applies for the ROOT authority within its application, prompt information "Bilin is prohibited using the ROOT authority, if needed, it may be added in the authority management" is displayed.

In step S77, the authority option is updated according to a choice of the user. For example, referring to Fig. 16, when "Bilin" applies for acquiring the authority of sending SMS to register an account, there are two choices of "permission" and "rejection" below the interface, and when the user chooses "permission" according to the choice of the user, the authority option of acquiring the authority of sending SMS for "Bilin" is updated. Additionally, "remember my choice" may also be checked.

In the embodiments of the present disclosure, by receiving the authority result sent from the server, the configuration information is acquired according to the authority result, and according to the type information and the setting information in the configuration information, a corresponding strategy for updating the authority is adopted according to the corresponding type, privacy of the user may be better protected; by prompt of a white list, it may avoid convenience brought to the user due to that a corresponding function can not normally work when a corresponding application does not auto-start; by setting the sensitive authority, it may prompt a function of the authority of the application, such that the user conveniently knows advantage and disadvantage when the authority is granted, so as to make a correct choice, thus user experience is improved.

The above described methods provided by the embodiments of the present disclosure will be explained hereinafter, by taking the process of acquiring an accuracy of the authority choice from the authority result sent from the server, and further determining, according to the accuracy of the authority choice, whether to update the corresponding authority option according to the authority result as an example.

Fig. 24 is a flow chart showing a method for managing an authority, according to an exemplary embodiment. The method is applied in a terminal, and specifically includes the following steps.

In step S81, an authority result sent from a server is received.

The authority result may include: a user ID, an application name, a name of an authority, an authority choice and an accuracy of the authority choice, wherein the user ID is key content for judging and solely identifying the user, which may be a cell phone number, a user name of a registered user, or other key contents that may solely identify the user. For example, a Mi-talk number; the application name refers to a program or an application that may set an authority, which not only includes applications used by the user such as Mi-talk, WeChat and the like, as well as applicants that auto-start in a system, but also includes system programs owned by the system while installing such as Computer, On-line neighbor and the like; the authority choice includes permission, rejection, inquiry and default; taking a privacy related application as an example, in SMS (Short Message Service), the name of the authority is accessing SMS inbox, which can be according to statistics of lots of records used by the user, and an application that is permitted accessing SMS inbox, an application that is rejected accessing SMS inbox, an application that needs to enquiry the user before accessing SMS inbox or an application for which no authority of accessing SMS inbox is set are classified and processed in accordance with the authority choices, to obtain the authority result of the application of accessing SMS inbox.

In step S82, an accuracy of the authority choice is acquired in the authority result received from the server, and whether the accuracy of the authority choice is greater than a preset accuracy is determined; when the accuracy of the authority choice is greater than the preset accuracy, step S83 is performed; and when the accuracy of the authority choice is smaller than the preset accuracy, the corresponding authority option is not updated.

The preset accuracy may be preset according to requirements of the accuracy in the system. For example, when the preset accuracy is 90%, and the accuracy of the authority choice is lower than 90%, the corresponding authority option is not updated.

In step S83, the corresponding authority option is updated according to the authority result.

In an embodiment, the procedure for updating the corresponding authority option according to the authority result refers to the implementation procedures of the steps S52-S53, which will not be redundantly described herein.

It is to be explained that, in combination with the above described implementation manners, in an embodiment, after the updating the corresponding authority option according to the authority result, the method further includes obtaining the authority use data of the user according to the updated authority option; and returning the authority use data of the user to the server, for the server to store the authority use data of the user to a cloud.

In the embodiments of the present disclosure, by determining an accuracy of an analysis result of the authority use data according to a test, whether to update the authority result of the user may be determined according to the accuracy, thereby an error rate of updating the authority is decreased, and user experience is improved.

Fig. 25 is a block diagram illustrating a device for managing an authority, according to an exemplary embodiment. Referring to Fig. 25, the device may include an acquiring module 251, a processing module 252 and a sending module 253.

The acquiring module 251 is configured to acquire authority use data of a user.

The processing module 252 is configured to process the authority use data to obtain an authority result.

The sending module 253 is configured to send the authority result obtained by the processing to a terminal, for the terminal to update a corresponding authority option.

Referring to Fig. 26, the processing module 252 includes:
a processing submodule 261 configured to process the authority use data in accordance with an authority choice, to obtain an authority confidence value and an initial authority choice; and
an adjustment submodule 262 configured to adjust the initial authority choice according to the authority confidence value and a threshold value, to obtain the authority result.

Referring to Fig. 27, the processing submodule 261 may include:
a de-noising unit 271 configured to de-noising process the authority use data; and
a training unit 272 configured to perform a SVM training on the de-noised authority use data respectively in accordance with two authority choices of permission and rejection in the authority option, to obtain the authority confidence value and the initial authority choice of the corresponding authority option.

Referring to Fig. 28, the processing submodule 261 may include:
a de-noising unit 281 configured to de-noising process the authority use data;
a clustering unit 282 configured to perform cluster analysis on the authority use data with respect to the user in accordance with a cluster algorithm, to obtain a cluster type of the user; and
a training unit 283 configured to, according to the cluster type of the user, perform a SVM training on each type of the user respectively in accordance with two choices of permission and rejection in the authority option, to obtain the authority confidence value and the initial authority choice corresponding to the authority option.

Referring to Fig. 29, the processing submodule 261 may include:
a de-noising unit 291 configured to de-noising process the authority use data;
a classification unit 292 configured to classify the de-noised authority use data into training set data and testing set data in accordance with a classification ratio; and
a training unit 293 configured to perform a SVM training on the training set data respectively in accordance with two authority choices of permission and rejection in the authority option, to obtain the initial authority choice and the authority confidence value corresponding to the authority option.

In combination with the above device, the device further includes:
a determination module configured to determine correctness of the initial authority choice based on the testing set data, to obtain an accuracy of the authority choice.

Referring to Fig. 30, the adjustment submodule 262 may include:
a comparison unit 301 configured to respectively compare the authority confidence value corresponding to the authority option with the threshold value;
a first adjustment unit 302 configured to, when the authority confidence value is smaller than the threshold value, adjust the initial authority choice to be an inquiry choice, as the authority result; and
a second adjustment unit 303 configured to, when the authority confidence value is greater than or equal to the threshold value, use the initial authority choice as the authority result.

Fig. 31 is a block diagram illustrating a device for managing an authority, according to an exemplary embodiment. Referring to Fig. 31, the device may include a receiving module 311, an acquiring module 312 and an update module 312.

The receiving module 311 is configured to receive an authority result sent from a server.

The acquiring module 312 is configured to acquire configuration information of a corresponding authority according to the authority result.

The update module 313 is configured to update a corresponding authority option according to the configuration information corresponding to the current authority.

Referring to Fig. 32, the acquiring module 312 may include:
a first acquiring unit 321 configured to acquire an application name in the authority result that is currently received; and
a second acquiring unit 322 configured to acquire the configuration information of the current authority according to the application name.

Referring to Fig. 33, the first acquiring unit 321 includes:
an acquiring subunit 331 configured to acquire a user ID in the authority result that is currently received; and
a matching subunit 332 configured to, when the user ID in the authority result matches a terminal user ID, acquire the application name.

Referring to Fig. 34, the update module 313 may include:
a query unit 341 configured to query a type to which a name of the current authority belongs, according to type information in the configuration information;
a determination unit 342 configured to, when a type of the current authority is an auto-start type, determine whether the current authority belongs to a white list, and if it does, pop up a dialog box to prompt to update description information of the corresponding authority option; and
an update unit 343 configured to update the authority option according to a choice of the user.

Referring to Fig. 35, the update module 313 may include:
a query unit 351 configured to query a type to which a name of the current authority belongs, according to type information in the configuration information;
a determination unit 352 configured to, when a type of the current authority is an application type, determine whether the current authority belongs to a sensitive authority, and if it does, pop up a dialog box to inquire the user whether to update the corresponding authority option; and
an update unit 353 configured to update the authority option according to a choice of the user.

Referring to Fig. 36, the update module 313 may include:
a query unit 361 configured to query a type to which a name of the current authority belongs, according to type information in the configuration information; and
a determination unit 362 configured to, when a type of the current authority is a ROOT type, determine whether the current authority has obtained a ROOT authority in ROOT authority management, and if the current authority has obtained the ROOT authority in the ROOT authority management, pop up a dialog box to inquire the user whether to update the corresponding authority option; and if the current authority does not obtain the ROOT authority in the ROOT authority management, prompt the user that the authority option is not permitted to be updated.

In combination with the above device, the device further includes:
a determination module configured to acquire an accuracy of the authority choice in the authority result received from the server, determine whether the accuracy of the authority choice is greater than a preset accuracy, and when the accuracy of the authority choice is greater than the preset accuracy, update the corresponding authority option by the update module according to the authority result, and when the accuracy of the authority choice is smaller than the preset accuracy, not update the corresponding authority option.

In combination with the above device, the device further includes:
a returning module configure to, according to the updated authority option, return the authority use data of the user to the server, for the server to store the authority use data of the user to a cloud.

There provides a system for managing an authority illustrated in an exemplary embodiment of the present disclosure. The system may include any device for managing an authority applied in a server illustrated in the above described embodiments and any device for managing an authority applied in a terminal according to the above described embodiments.

The present disclosure provides a system for managing an authority, including:
a first processor; and
a memory for storing instructions executed by the first processor;
wherein the first processor is configured to:
   acquire authority use data of a user from a cloud;
   process the authority use data to obtain an authority result; and
   send the authority result obtained by the processing to a terminal, for the terminal to update a corresponding authority option; and
   a second processor; and
a memory for storing instructions executed by the second processor;
wherein the second processor is configured to:
receive an authority result sent from a server;
acquire configuration information of a corresponding authority according to the authority result; and
update a corresponding authority option according to the configuration information corresponding to the current authority.

With respect to the devices and the system in the above embodiments, the specific manners for performing operations for respective modules therein have been described in detail in the embodiments with regard to the methods, which will not be elaborated herein.

Fig. 37 is a block diagram illustrating a device 800 for controlling a terminal apparatus, according to an exemplary embodiment. For example, the device 800 may be a mobile phone, a computer, a digital broadcast terminal, a messaging device, a gaming console, a tablet, a medical device, exercise equipment, a personal digital assistant and the like.

Referring to Fig. 37, the device 800 may include one or more of the following components: a processing component 802, a memory 804, a power component 806, a multimedia component 808, an audio component 810, an input/output (I/O) interface 812, a sensor component 814, and a communication component 816.

The processing component 802 usually controls overall operations of the device 800, such as operations associated with display, telephone calls, data communications, camera operations and recording operations. The processing component 802 may include one or more processors 820 to execute instructions to perform all or a part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any application or method operated on the device 800, contact data, phonebook data, messages, pictures, videos, etc. The memory 804 may be implemented by any type of volatile or non-volatile memory device or combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 806 provides power to various components of the device 800. The power component 806 may include a power management system, one or more power sources, and other components associated with the generation, management, and distribution of power in the device 800.

The multimedia component 808 includes a screen for providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, slips, and gestures on the touch panel. The touch sensors may not only sense a boundary of a touch or slip action, but also sense a period of time and a pressure associated with the touch or slip action. In some embodiments, the multimedia component 808 includes a front camera and/or a rear camera. The front camera and/or the rear camera may receive external multimedia data while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, a button, and the like. The button may include, but not limited to: a home button, a volume button, a starting button and a locking button.

The sensor component 814 includes one or more sensors to provide status assessments of various aspects of the device 800. For instance, the sensor component 814 may detect an open/closed status of the device 800, relative position of components, e.g., the display and the keyboard, of the device 800, a change in position of the device 800 or a component of the device 800, a presence or absence of an user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may further include a light sensor, such as a CMOS or CCD image sensor, for use in imaging applications. In some embodiments, the sensor component 814 may further include an accelerometer sensor, a gyroscope sensor, a magnetic sensor, a pressure sensor, or a temperature sensor.

The communication component 816 is configured to facilitate communication, in a wire or wireless manner, between the device 800 and other devices. The device 800 can access a wireless network based on a communication standard, such as WiFi, 2G or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-bandwidth (UWB) technology, a Bluetooth (BT) technology, and other technologies.

In exemplary embodiments, the device 800 may be implemented by one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors or other electronic components, for performing the above described methods.

In exemplary embodiments, there further provides a non-transitory computer readable storage medium including instructions, such as included in the memory 804, executable by the processor 820 in the device 800, for performing the above described methods. For example, the non-transitory computer-readable storage medium may be a ROM, a random access memory (RAM), a CD-ROM, a magnetic tape, a floppy disc, an optical data storage device and the like.

There provides a non-transitory computer readable storage medium, when instructions in the storage medium are executed by a processor of a mobile terminal, the mobile terminal can execute a method for managing an authority, including:
acquiring authority use data of a user;
processing the authority use data to obtain an authority result; and
sending the authority result obtained by the processing to a terminal, for the terminal to update a corresponding authority option.

Fig. 38 is a block diagram illustrating a device 1900 for managing an authority, according to an exemplary embodiment. For example, the device 1900 may be provided as a server. Referring to Fig. 19, the device 1900 includes a processing component 1922 that further includes one or more processors, and memory resources represented by a memory 1932 for storing instructions executable by the processing component 1922, such as application programs. The application programs stored in the memory 1932 may include one or more modules each corresponding to a set of instructions. Further, the processing component 1922 is configured to execute the instructions to perform the method including:
receiving an authority result sent from a server;
acquiring configuration information of a corresponding authority according to the authority result; and
updating a corresponding authority option according to the configuration information corresponding to the current authority.

The device 1900 may further include one power component 1926 configured to perform power management of the device 1900, one wired or wireless network interface 1950 configured to connect the device 1900 to a network, and one input/output (I/O) interface 1958. The device 1900 may operate based on an operating system stored in the memory 1932, such as Windows ServerTM, Mac OS XTM, UnixTM, LinuxTM, FreeBSDTM, or the like.

After considering this description and carrying out the disclosure herein, those skilled in the art will easily anticipate other implementation aspects of the present disclosure. The present application is meant to cover any variations, usage or adaptive change of the present disclosure, and these variations, usage or adaptive change follow general concept of the present disclosure and include the common knowledge or the customary technical means in the technical field that is not disclosed in the present disclosure. The description and embodiments are only exemplary, and the real range and spirit of the present disclosure are defined by the following claims.

It should be understood that the present disclosure is not limited to precise structures that are described above and shown in the accompanying drawings, and may be modified and changed without departing from the range of the present disclosure. The scope of the present disclosure is only defined by the appended claims.

## Claims

1. A method for managing an authority implemented by a server, the method comprises:
acquiring (S11) authority use data of a user, the authority use data being at least one history use record of an authority option of said user that is recorded in a cloud;
**characterized in that** the method further comprises:
processing (S12) the authority use data to obtain an authority result, comprising:
processing (S22) the authority use data in accordance with an authority choice, to obtain an authority confidence value and an initial authority choice; and
adjusting (S23) the initial authority choice according to the authority confidence value and a threshold value, to obtain the authority result, wherein the authority result includes a user ID, an application name, a name of an authority, and an authority choice; and
sending (S13) the authority result obtained by the processing to a terminal, for the terminal to update a corresponding authority option.

2. The method according to claim 1, **characterized in that**, the step of processing the authority use data in accordance with the authority choice, to obtain the authority confidence value and the initial authority choice comprises:
de-noising (S32) processing the authority use data;
performing (S33) a SVM training on the de-noised authority use data respectively in accordance with two authority choices of permission and rejection in the authority option, to obtain the authority confidence value and the initial authority choice of the corresponding authority option.

3. The method according to claim 1, **characterized in that**, the step of processing the authority use data in accordance with the authority choice, to obtain the authority confidence value and the initial authority choice comprises:
de-noising (S42) processing the authority use data;
performing (S43) a cluster analysis on the authority use data with respect to the user in accordance with a cluster algorithm, to obtain a cluster type of the user; and
according to the cluster type of the user, performing (S44) a SVM training on each type of the user respectively in accordance with two choices of permission and rejection in the authority option, to obtain the authority confidence value and the initial authority choice corresponding to the authority option.

4. The method according to claim 1, **characterized in that**, the processing the authority use data in accordance with the authority choice, to obtain the authority confidence value and the initial authority choice comprises:
de-noising (S52) processing the authority use data;
classifying (S53) the de-noised authority use data into training set data and testing set data in accordance with a classification ratio; and
performing (S54) a SVM training on the training set data respectively in accordance with two authority choices of permission and rejection in the authority option, to obtain the initial authority choice and the authority confidence value corresponding to the authority option.

5. The method according to claim 4, **characterized in that**, the method further comprises:
determining (S55) correctness of the initial authority choice based on the testing set data, to obtain an accuracy of the authority choice.

6. The method according to anyone of claims 1 to 5, **characterized in that**, the step of adjusting the initial authority choice according to the authority confidence value and the threshold value, to obtain the authority result comprises:
comparing (S34-1) the authority confidence value corresponding to the authority option with the threshold value; and
when the authority confidence value is smaller than the threshold value, adjusting (S34-2) the initial authority choice to be an inquiry choice, as the authority result; and
when the authority confidence value is greater than or equal to the threshold value, using (S34-3) the initial authority choice as the authority result.

7. A method for managing an authority implemented by a terminal, **characterized in that**, the method comprises:
receiving (S61) an authority result sent from a server, the authority result including a user ID, an application name, a name of an authority, and an authority choice and being obtained by processing authority use data which is at least one history use record of an authority option of a user that is recorded in a cloud;
acquiring (S62) configuration information of a corresponding authority according to the authority result; and
updating (S63) a corresponding authority option according to the configuration information corresponding to the current authority.

8. The method according to claim 7, **characterized in that**, the step of updating the corresponding authority option according to the configuration information corresponding to the current authority comprises:
querying (S73) a type to which a name of the current authority belongs, according to type information in the configuration information; and
when a type of the current authority is an auto-start type, determining (S74) whether the current authority belongs to a white list, and if it does, popping up a dialog box to prompt to update description information of the corresponding authority option; and
updating (S77) the authority option according to a choice of the user.

9. The method according to claim 8 or 9, **characterized in that**, the step of updating the corresponding authority option according to the configuration information corresponding to the current authority comprises:
querying (S73) a type to which a name of the current authority belongs, according to type information in the configuration information; and
when a type of the current authority is an application type, determining (S75) whether the current authority belongs to a sensitive authority, and if it does, popping up a dialog box to inquire the user whether to update the corresponding authority option; and
updating (S77) the authority option according to a choice of the user.

10. The method according to anyone of claims 7 to 9, **characterized in that**, the updating the corresponding authority option according to the configuration information corresponding to the current authority comprises:
querying (S73) a type to which a name of the current authority belongs, according to type information in the configuration information; and
when a type of the current authority is a ROOT type, determining (S76) whether the current authority has obtained a ROOT authority in ROOT authority management, and if the current authority has obtained the ROOT authority in the ROOT authority management, popping up a dialog box to inquire the user whether to update the corresponding authority option; and if the current authority does not obtain the ROOT authority in the ROOT authority management, prompting the user that the authority option is not permitted to be updated.

11. The method according to anyone of claims 7 to 10, **characterized in that**, the method further comprises:
acquiring (S82) an accuracy of the authority choice in the authority result received from the server, and determining whether the accuracy of the authority choice is greater than a preset accuracy; and
when the accuracy of the authority choice is greater than the preset accuracy, updating (S83) the corresponding authority option according to the authority result; and
when the accuracy of the authority choice is smaller than the preset accuracy, not updating (S84) the corresponding authority option.

12. The method according to any one of claims 7-11, **characterized in that**, the method further comprises:
obtaining the authority use data of the user according to the updated authority option; and
returning the authority use data of the user to the server, for the server to store the authority use data of the user to a cloud.

13. A device for managing an authority, the device comprising:
an acquiring module (251) configured to acquire authority use data of a user, the authority use data being at least one history use record of an authority option of said user that is recorded in a cloud;
a processing module (252) configured to process the authority use data to obtain an authority result, comprising:
a processing submodule (261) configured to process the authority use data in accordance with an authority choice, to obtain an authority confidence value and an initial authority choice; and
an adjustment submodule (262) configured to adjust the initial authority choice according to the authority confidence value and a threshold value, to obtain the authority result, wherein the authority result includes a user ID, an application name, a name of an authority, and an authority choice; and
a sending module (253) configured to send the authority result obtained by the processing to a terminal, for the terminal to update a corresponding authority option.

14. A device for managing an authority, **characterized in that**, the device comprises:
a receiving module (311) configured to receive an authority result sent from a server, the authority result including a user ID, an application name, a name of an authority, and an authority choice and being obtained by processing authority use data which is at least one history use record of an authority option of a user that is recorded in a cloud;
an acquiring module (312) configured to acquire configuration information of a corresponding authority according to the authority result; and
an update module (313) configured to update a corresponding authority option according to the configuration information corresponding to the current authority.

15. A system for managing an authority, **characterized in that**, the system comprises:
at least a device for managing the authority according to claim 13 and at least a device for managing the authority according to claim 14.

## Patentansprüche

1. Verfahren zur Verwaltung einer Berechtigung, das von einem Server implementiert ist, wobei das Verfahren umfasst:
Erfassen (S11) von Berechtigungsnutzungsdaten eines Nutzers, wobei die Berechtigungsnutzungsdaten mindestens eine Verlaufsnutzungsaufzeichnung einer Berechtigungsoption des Nutzers sind, die in einer Cloud aufgezeichnet wird,
**dadurch gekennzeichnet, dass** das Verfahren ferner umfasst:
Bearbeiten (S12) der Berechtigungsnutzungsdaten, um ein Berechtigungsergebnis zu erhalten, umfassend:
Bearbeiten (S22) der Berechtigungsnutzungsdaten gemäß einer Berechtigungswahl, um einen Berechtigungsvertrauenswert und eine Anfangsberechtigungswahl zu erhalten, und
Einstellen (S23) der Anfangsberechtigungswahl gemäß dem Berechtigungsvertrauenswert und einem Schwellenwert, um das Berechtigungsergebnis zu erhalten, wobei das Berechtigungsergebnis eine Nutzer-ID, einen Anwendungsnamen, einen Namen einer Berechtigung und eine Berechtigungswahl beinhaltet, und
Senden (S13) des Berechtigungsergebnisses, das durch die Bearbeitung erhalten wird, zu einem Endgerät, damit das Endgerät eine entsprechende Berechtigungsoption aktualisiert.

2. Verfahren nach Anspruch 1, **dadurch gekennzeichnet, dass** der Schritt des Bearbeitens der Berechtigungsnutzungsdaten gemäß der Berechtigungswahl, um den Berechtigungsvertrauenswert und die Anfangsberechtigungswahl zu erhalten, umfasst:
Rauschunterdrückungsbearbeiten (S32) der Berechtigungsnutzungsdaten,
Durchführen (S33) eines SVM-Trainings bezüglich der rauschunterdrückten Berechtigungsnutzungsdaten jeweils gemäß zwei Berechtigungswahlen von Genehmigung und Verweigerung bei der Berechtigungsoption, um den Berechtigungsvertrauenswert und die Anfangsberechtigungswahl der entsprechenden Berechtigungsoption zu erhalten.

3. Verfahren nach Anspruch 1, **dadurch gekennzeichnet, dass** der Schritt des Bearbeitens der Berechtigungsnutzungsdaten gemäß der Berechtigungswahl, um den Berechtigungsvertrauenswert und die Anfangsberechtigungswahl zu erhalten, umfasst:
Rauschunterdrückungsbearbeiten (S42) der Berechtigungsnutzungsdaten,
Durchführen (S43) einer Cluster-Analyse bezüglich der Berechtigungsnutzungsdaten bezüglich des Nutzers gemäß einem Cluster-Algorithmus, um eine Clusterart des Nutzers zu erhalten, und
gemäß der Clusterart des Nutzers, Durchführen (S44) eines SVM-Trainings bei jeder Art des Nutzers jeweils gemäß zwei Wahlen von Genehmigung und Verweigerung bei der Berechtigungsoption, um den Berechtigungsvertrauenswert und die Anfangsberechtigungswahl entsprechend der Berechtigungsoption zu erhalten.

4. Verfahren nach Anspruch 1, **dadurch gekennzeichnet, dass** das Bearbeiten der Berechtigungsnutzungsdaten gemäß der Berechtigungswahl, um den Berechtigungsvertrauenswert und die Anfangsberechtigungswahl zu erhalten, umfasst:
Rauschunterdrückungsbearbeiten (S52) der Berechtigungsnutzungsdaten,
Klassifizieren (S53) der rauschunterdrückten Berechtigungsnutzungsdaten in Trainingsgruppendaten und Testgruppendaten gemäß einem Klassifizierungsverhältnis, und
Durchführen (S54) eines SVM-Trainings bezüglich der Trainingsgruppendaten jeweils gemäß zwei Berechtigungswahlen von Genehmigung und Verweigerung bei der Berechtigungsoption, um die Anfangsberechtigungswahl und den Berechtigungsvertrauenswert entsprechend der Berechtigungsoption zu erhalten.

5. Verfahren nach Anspruch 4, **dadurch gekennzeichnet, dass** das Verfahren ferner umfasst:
Bestimmen (S55) der Richtigkeit der Anfangsberechtigungswahl auf Grundlage der Testgruppendaten, um eine Genauigkeit der Berechtigungswahl zu erhalten.

6. Verfahren nach einem der Ansprüche 1 bis 5, **dadurch gekennzeichnet, dass** der Schritt des Einstellens der Anfangsberechtigungswahl gemäß dem Berechtigungsvertrauenswert und dem Schwellenwert, um das Berechtigungsergebnis zu erhalten, umfasst:
Vergleichen (S34-1) des Berechtigungsvertrauenswerts entsprechend der Berechtigungsoption mit dem Schwellenwert, und
wenn der Berechtigungsvertrauenswert kleiner als der Schwellenwert ist, derartiges Einstellen (S34-2) der Anfangsberechtigungswahl, dass sie eine Anfragewahl ist, als das Berechtigungsergebnis, und
wenn der Berechtigungsvertrauenswert größer als oder gleich groß wie der Schwellenwert ist, Verwenden (S34-3) der Anfangsberechtigungswahl als das Berechtigungsergebnis.

7. Verfahren zur Verwaltung einer Berechtigung, das von einem Endgerät implementiert ist, **dadurch gekennzeichnet, dass** das Verfahren umfasst:
Erhalten (S61) eines Berechtigungsergebnisses, das von einem Server gesendet wird, wobei das Berechtigungsergebnis eine Nutzer-ID, einen Anwendungsnamen, einen Namen einer Berechtigung und eine Berechtigungswahl beinhaltet und durch Bearbeiten von Berechtigungsnutzungsdaten erhalten wird, welche mindestens eine Verlaufsnutzungsaufzeichnung einer Berechtigungsoption eines Nutzers, die in einer Cloud aufgezeichnet wird, sind,
Erfassen (S62) von Konfigurationsinformationen einer entsprechenden Berechtigung gemäß dem Berechtigungsergebnis, und
Aktualisieren (S63) einer entsprechenden Berechtigungsoption gemäß den Konfigurationsinformationen entsprechend der aktuellen Berechtigung.

8. Verfahren nach Anspruch 7, **dadurch gekennzeichnet, dass** der Schritt des Aktualisierens der entsprechenden Berechtigungsoption gemäß den Konfigurationsinformationen entsprechend der aktuellen Berechtigung umfasst:
Anfragen (S73) einer Art, zu welcher ein Name der aktuellen Berechtigung gehört, gemäß Artinformationen in den Konfigurationsinformationen, und
wenn eine Art der aktuellen Berechtigung eine Autostartart ist, Bestimmen (S74), ob die aktuelle Berechtigung zu einer weißen Liste gehört, und wenn dem so ist, Aufpoppen einer Dialogbox zum Auffordern einer Aktualisierung von Beschreibungsinformationen der entsprechenden Berechtigungsoption, und
Aktualisieren (S77) der Berechtigungsoption gemäß einer Wahl des Nutzers.

9. Verfahren nach Anspruch 8 oder 9, **dadurch gekennzeichnet, dass** der Schritt des Aktualisierens der entsprechenden Berechtigungsoption gemäß den Konfigurationsinformationen entsprechend der aktuellen Berechtigung umfasst:
Anfragen (S73) einer Art, zu welcher ein Name der aktuellen Berechtigung gehört, gemäß Artinformationen in den Konfigurationsinformationen, und
wenn eine Art der aktuellen Berechtigung eine Anwendungsart ist, Bestimmen (S75), ob die aktuelle Berechtigung zu einer sensiblen Berechtigung gehört, und wenn dem so ist, Aufpoppen einer Dialogbox, um den Nutzer anzufragen, ob die entsprechende Berechtigungsoption aktualisiert werden soll, und
Aktualisieren (S77) der Berechtigungsoption gemäß einer Wahl des Nutzers.

10. Verfahren nach einem der Ansprüche 7 bis 9, **dadurch gekennzeichnet, dass** das Aktualisieren der entsprechenden Berechtigungsoption gemäß den Konfigurationsinformationen entsprechend der aktuellen Berechtigung umfasst:
Anfragen (S73) einer Art, zu welcher ein Name der aktuellen Berechtigung gehört, gemäß Artinformationen in den Konfigurationsinformationen, und
wenn eine Art der aktuellen Berechtigung eine ROOT-Art ist, Bestimmen (S76), ob die aktuelle Berechtigung eine ROOT-Berechtigung in der ROOT-Berechtigungsverwaltung erhalten hat, und wenn die aktuelle Berechtigung die ROOT-Berechtigung in der ROOT-Berechtigungsverwaltung erhalten hat, Aufpoppen einer Dialogbox, um den Nutzer anzufragen, ob die entsprechende Berechtigungsoption aktualisiert werden soll, und wenn die aktuelle Berechtigung die ROOT-Berechtigung in der ROOT-Berechtigungsverwaltung nicht erhält, Auffordern des Nutzers, dass die Berechtigungsoption nicht aktualisiert werden darf.

11. Verfahren nach einem der Ansprüche 7 bis 10, **dadurch gekennzeichnet, dass** das Verfahren ferner umfasst:
Erfassen (S82) einer Genauigkeit der Berechtigungswahl in dem Berechtigungsergebnis, das von dem Server erhalten wird, und Bestimmen, ob die Genauigkeit der Berechtigungswahl größer als eine vorab festgelegte Genauigkeit ist, und
wenn die Genauigkeit der Berechtigungswahl größer als die vorab festgelegte Genauigkeit ist, Aktualisieren (S83) der entsprechenden Berechtigungsoption gemäß dem Berechtigungsergebnis, und
wenn die Genauigkeit der Berechtigungswahl kleiner als die vorab festgelegte Genauigkeit ist, Nicht-Aktualisieren (S84) der entsprechenden Berechtigungsoption.

12. Verfahren nach einem der Ansprüche 7-11, **dadurch gekennzeichnet, dass** das Verfahren ferner umfasst:
Erhalten der Berechtigungsnutzungsdaten des Nutzers gemäß der aktualisierten Berechtigungsoption, und
Zurückgeben der Berechtigungsnutzungsdaten des Nutzers an den Server, damit der Server die Berechtigungsnutzungsdaten des Nutzers in einer Cloud speichert.

13. Vorrichtung zur Verwaltung einer Berechtigung, wobei die Vorrichtung umfasst:
ein Erfassungsmodul (251), das konfiguriert ist, um Berechtigungsnutzungsdaten eines Nutzers zu erfassen, wobei die Berechtigungsnutzungsdaten mindestens eine Verlaufsnutzungsaufzeichnung einer Berechtigungsoption des Nutzers sind, die in einer Cloud aufgezeichnet wird,
ein Bearbeitungsmodul (252), das konfiguriert ist, um die Berechtigungsnutzungsdaten zu bearbeiten, um ein Berechtigungsergebnis zu erhalten, umfassend:
ein Bearbeitungsuntermodul (261), das konfiguriert ist, um die Berechtigungsnutzungsdaten gemäß einer Berechtigungswahl zu bearbeiten, um einen Berechtigungsvertrauenswert und eine Anfangsberechtigungswahl zu erhalten, und
ein Einstellungsuntermodul (262), das konfiguriert ist, um die Anfangsberechtigungswahl gemäß dem Berechtigungsvertrauenswert und einem Schwellenwert einzustellen, um das Berechtigungsergebnis zu erhalten, wobei das Berechtigungsergebnis eine Nutzer-ID, einen Anwendungsnamen, einen Namen einer Berechtigung und eine Berechtigungswahl beinhaltet, und
ein Sendemodul (253), das konfiguriert Ist, um das Berechtigungsergebnis, das durch die Bearbeitung erhalten wird, zu einem Endgerät zu senden, damit das Endgerät eine entsprechende Berechtigungsoption aktualisiert.

14. Vorrichtung zur Verwaltung einer Berechtigung, **dadurch gekennzeichnet, dass** die Vorrichtung umfasst:
ein Empfangsmodul (311), das konfiguriert ist, um ein Berechtigungsergebnis zu empfangen, das von einem Server gesendet wird, wobei das Berechtigungsergebnis eine Nutzer-ID, einen Anwendungsnamen, einen Namen einer Berechtigung und eine Berechtigungswahl beinhaltet und durch Bearbeiten von Berechtigungsnutzungsdaten erhalten wird, welche mindestens eine Verlaufsnutzungsaufzeichnung einer Berechtigungsoption eines Nutzers sind, die in einer Cloud aufgezeichnet wird,
ein Erfassungsmodul (312), das konfiguriert ist, um Konfigurationsinformationen einer entsprechenden Berechtigung gemäß dem Berechtigungsergebnis zu erfassen, und
ein Aktualisierungsmodul (313), das konfiguriert ist, um eine entsprechende Berechtigungsoption gemäß den Konfigurationsinformationen entsprechend der aktuellen Berechtigung zu aktualisieren.

15. System zur Verwaltung einer Berechtigung, **dadurch gekennzeichnet, dass** das System umfasst:
mindestens eine Vorrichtung zur Verwaltung der Berechtigung nach Anspruch 13 und mindestens eine Vorrichtung zur Verwaltung der Berechtigung nach Anspruch 14.

## Revendications

1. Procédé de gestion d'une autorité mis en oeuvre par un serveur, le procédé comprend :
l'acquisition (S11) de données d'utilisation d'autorité d'un utilisateur, les données d'utilisation d'autorité étant au moins un enregistrement d'utilisation d'historique d'une option d'autorité dudit utilisateur qui est enregistré dans un nuage ;
**caractérisé en ce que** le procédé comprend en outre :
le traitement (S12) des données d'utilisation d'autorité pour obtenir un résultat d'autorité, comprenant :
le traitement (S22) des données d'utilisation d'autorité conformément à un choix d'autorité, pour obtenir une valeur de confiance d'autorité et un choix d'autorité initial ; et
l'ajustement (S23) du choix d'autorité initial en fonction de la valeur de confiance d'autorité et d'une valeur de seuil, pour obtenir le résultat d'autorité, où le résultat d'autorité inclut un ID d'utilisateur, un nom d'application, un nom d'une autorité, et un choix d'autorité ; et
l'envoi (S13) du résultat d'autorité obtenu par le traitement à un terminal, pour que le terminal mette à jour une option d'autorité correspondante.

2. Procédé selon la revendication 1, **caractérisé en ce que** l'étape de traitement des données d'utilisation d'autorité conformément au choix d'autorité, pour obtenir la valeur de confiance d'autorité et le choix d'autorité initial comprend :
le débruitage (S32) du traitement des données d'utilisation d'autorité ;
l'exécution (S33) d'un apprentissage SVM sur les données d'utilisation d'autorité débruitées respectivement conformément à deux choix d'autorité de permission et de rejet dans l'option d'autorité, pour obtenir la valeur de confiance d'autorité et le choix d'autorité initial de l'option d'autorité correspondante.

3. Procédé selon la revendication 1, **caractérisé en ce que** l'étape de traitement des données d'utilisation d'autorité conformément au choix d'autorité, pour obtenir la valeur de confiance d'autorité et le choix d'autorité initial comprend :
le débruitage (S42) du traitement des données d'utilisation d'autorité ;
l'exécution (S43) d'une analyse de grappe sur les données d'utilisation d'autorité relativement à l'utilisateur conformément à un algorithme de grappe, pour obtenir un type de grappe de l'utilisateur ; et
en fonction du type de grappe de l'utilisateur, l'exécution (S44) d'un apprentissage SVM sur chaque type de l'utilisateur respectivement conformément à deux choix de permission et de rejet dans l'option d'autorité, pour obtenir la valeur de confiance d'autorité et le choix d'autorité initial correspondant à l'option d'autorité.

4. Procédé selon la revendication 1, **caractérisé en ce que** le traitement des données d'utilisation d'autorité conformément au choix d'autorité, pour obtenir la valeur de confiance d'autorité et le choix d'autorité initial comprend :
le débruitage (S52) du traitement des données d'utilisation d'autorité ;
la classification (S53) des données d'utilisation d'autorité débruitées en données d'ensemble d'apprentissage et données d'ensemble de test conformément à un rapport de classification ; et
l'exécution (S54) d'un apprentissage SVM sur les données d'ensemble d'apprentissage respectivement conformément à deux choix d'autorité de permission et de rejet dans l'option d'autorité, pour obtenir le choix d'autorité initial et la valeur de confiance d'autorité correspondant à l'option d'autorité.

5. Procédé selon la revendication 4, **caractérisé en ce que** le procédé comprend en outre :
la détermination (S55) de l'exactitude du choix d'autorité initial sur la base des données d'ensemble de test, pour obtenir une précision du choix d'autorité.

6. Procédé selon l'une quelconque des revendications 1 à 5, **caractérisé en ce que** l'étape d'ajustement du choix d'autorité initial en fonction de la valeur de confiance d'autorité et de la valeur de seuil, pour obtenir le résultat d'autorité comprend :
la comparaison (S34-1) de la valeur de confiance d'autorité correspondant à l'option d'autorité avec la valeur de seuil ; et
lorsque la valeur de confiance d'autorité est inférieure à la valeur de seuil, l'ajustement (S34-2) du choix d'autorité initial pour qu'il soit un choix de demande, comme le résultat d'autorité ; et
lorsque la valeur de confiance d'autorité est supérieure ou égale à la valeur de seuil, l'utilisation (S34-3) du choix d'autorité initial comme le résultat d'autorité.

7. Procédé de gestion d'une autorité mis en oeuvre par un terminal, **caractérisé en ce que** le procédé comprend :
la réception (S61) d'un résultat d'autorité envoyé depuis un serveur, le résultat d'autorité incluant un ID d'utilisateur, un nom d'application, un nom d'une autorité, et un choix d'autorité et étant obtenu en traitant des données d'utilisation d'autorité qui sont au moins un enregistrement d'utilisation d'historique d'une option d'autorité d'un utilisateur qui est enregistré dans un nuage ;
l'acquisition (S62) d'informations de configuration d'une autorité correspondante en fonction du résultat d'autorité ; et
la mise à jour (S63) d'une option d'autorité correspondante en fonction des informations de configuration correspondant à l'autorité actuelle.

8. Procédé selon la revendication 7, **caractérisé en ce que** l'étape de mise à jour de l'option d'autorité correspondante en fonction des informations de configuration correspondant à l'autorité actuelle comprend :
l'interrogation (S73) d'un type auquel appartient un nom de l'autorité actuelle, en fonction d'informations de type dans les informations de configuration ; et
lorsqu'un type de l'autorité actuelle est un type à démarrage automatique, la détermination (S74) de si l'autorité actuelle appartient à une liste blanche et, si c'est le cas, le fait de faire surgir une boîte de dialogue pour inviter à mettre à jour des informations de description de l'option d'autorité correspondante ; et
la mise à jour (S77) de l'option d'autorité en fonction d'un choix de l'utilisateur.

9. Procédé selon la revendication 8 ou 9, **caractérisé en ce que** l'étape de mise à jour de l'option d'autorité correspondante en fonction des informations de configuration correspondant à l'autorité actuelle comprend :
l'interrogation (S73) d'un type auquel appartient un nom de l'autorité actuelle, en fonction d'informations de type dans les informations de configuration ; et
lorsqu'un type de l'autorité actuelle est un type d'application, la détermination (S75) de si l'autorité actuelle appartient à une autorité sensible et, si c'est le cas, le fait de faire surgir une boîte de dialogue pour demander à l'utilisateur s'il faut mettre à jour l'option d'autorité correspondante ; et
la mise à jour (S77) de l'option d'autorité en fonction d'un choix de l'utilisateur.

10. Procédé selon l'une quelconque des revendications 7 à 9, **caractérisé en ce que** la mise à jour de l'option d'autorité correspondante en fonction des informations de configuration correspondant à l'autorité actuelle comprend :
l'interrogation (S73) d'un type auquel appartient un nom de l'autorité actuelle, en fonction d'informations de type dans les informations de configuration ; et
lorsqu'un type de l'autorité actuelle est un type ROOT, la détermination (S76) de si l'autorité actuelle a obtenu une autorité ROOT dans une gestion d'autorité ROOT, et si l'autorité actuelle a obtenu l'autorité ROOT dans la gestion d'autorité ROOT, le fait de faire surgir une boîte de dialogue pour demander à l'utilisateur s'il faut mettre à jour l'option d'autorité correspondante ; et si l'autorité actuelle n'obtient pas l'autorité ROOT dans la gestion d'autorité ROOT, le fait de suggérer à l'utilisateur que l'option d'autorité n'est pas autorisée à être mise à jour.

11. Procédé selon l'une quelconque des revendications 7 à 10, **caractérisé en ce que** le procédé comprend en outre :
l'acquisition (S82) d'une précision du choix d'autorité dans le résultat d'autorité reçu du serveur, et la détermination de si la précision du choix d'autorité est supérieure à une précision prédéfinie ; et
lorsque la précision du choix d'autorité est supérieure à la précision prédéfinie, la mise à jour (S83) de l'option d'autorité correspondante en fonction du résultat d'autorité ; et
lorsque la précision du choix d'autorité est inférieure à la précision prédéfinie, le fait de ne pas mettre à jour (S84) l'option d'autorité correspondante.

12. Procédé selon l'une quelconque des revendications 7 à 11, **caractérisé en ce que** le procédé comprend en outre :
l'obtention des données d'utilisation d'autorité de l'utilisateur en fonction de l'option d'autorisation mise à jour ; et
le renvoi des données d'utilisation d'autorité de l'utilisateur au serveur, pour que le serveur stocke les données d'utilisation d'autorité de l'utilisateur sur un nuage.

13. Dispositif de gestion d'une autorité, le dispositif comprenant :
un module d'acquisition (251) configuré pour acquérir des données d'utilisation d'autorité d'un utilisateur, les données d'utilisation d'autorité étant au moins un enregistrement d'utilisation d'historique d'une option d'autorité dudit utilisateur qui est enregistré dans un nuage ;
un module de traitement (252) configuré pour traiter les données d'utilisation d'autorité pour obtenir un résultat d'autorité, comprenant :
un sous-module de traitement (261) configuré pour traiter les données d'utilisation d'autorité conformément à un choix d'autorité, pour obtenir une valeur de confiance d'autorité et un choix d'autorité initial ; et
un sous-module d'ajustement (262) configuré pour ajuster le choix d'autorité initial en fonction de la valeur de confiance d'autorité et d'une valeur de seuil, pour obtenir le résultat d'autorité, où le résultat d'autorité inclut un ID d'utilisateur, un nom d'application, un nom d'une autorité, et un choix d'autorité ; et
un sous-module d'envoi (253) configuré pour envoyer le résultat d'autorité obtenu par le traitement à un terminal, pour que le terminal mette à jour une option d'autorité correspondante.

14. Dispositif de gestion d'une autorité, **caractérisé en ce que** le dispositif comprend :
un module de réception (311) configuré pour recevoir un résultat d'autorité envoyé depuis un serveur, le résultat d'autorité incluant un ID d'utilisateur, un nom d'application, un nom d'une autorité, et un choix d'autorité et étant obtenu en traitant des données d'utilisation d'autorité qui sont au moins un enregistrement d'utilisation d'historique d'une option d'autorité d'un utilisateur qui est enregistré dans un nuage ;
un module d'acquisition (312) configuré pour acquérir des informations de configuration d'une autorité correspondante en fonction du résultat d'autorité ; et
un module de mise à jour (313) configuré pour mettre à jour une option d'autorité correspondante en fonction des informations de configuration correspondant à l'autorité actuelle.

15. Système de gestion d'une autorité, **caractérisé en ce que** le système comprend :
au moins un dispositif de gestion de l'autorité selon la revendication 13 et au moins un dispositif de gestion de l'autorité selon la revendication 14.
